# EUROPEAN PATENT SPECIFICATION

(11) **EP 3 766 669 B1**
(45) Date of publication and mention of the grant of the patent: **14.08.2024**
(21) Application number: 19305949.0
(22) Date of filing: 18.07.2019
(51) Int. Cl.: B29C 64/124, B33Y 70/00, B33Y 10/00

(54) **3D-PRINTING METHODS AND SYSTEMS**
VERFAHREN UND SYSTEME ZUM 3D-DRUCKEN
PROCÉDÉS ET SYSTÈMES D'IMPRESSION 3D

(43) Date of publication of application: 20.01.2021
(73) Proprietor: BOSTIK SA, 92700 Colombes (FR)
(72) Inventor: FERRE ROMEU, Meritxell, 08193 BELLATERRA - BARCELONA (ES); GARRA, Patxi, 08193 BELLATERRA - BARCELONA (ES); McARDLE, Ciaran, 08193 BELLATERRA - BARCELONA (ES); CAMPOS BELLOSTAS, Laura, 08193 BELLATERRA - BARCELONA (ES); AHBITI LAARAB, Esmael, 08193 BELLATERRA - BARCELONA (ES); VICENÇ I ROMAGUERA, Mariona, 08193 BELLATERRA - BARCELONA (ES)
(74) Representative: Bandpay & Greuter

(56) References cited:
- EP-A1- 3 124 509
- CORMAC DUFFY ET AL: "Radical Polymerization of Alkyl 2-Cyanoacrylates", MOLECULES ONLINE, vol. 23, no. 2, 20 February 2018 (2018-02-20), DE, pages 465, XP055657767, ISSN: 1433-1373, DOI: 10.3390/molecules23020465

## Description

### TECHNICAL FIELD

The present invention belongs to the field of three-dimensional (3D) printing methods. It relates to a method for printing a three-dimensional article, to a system thereof, the use thereof, and to a 3D printed article manufactured therewith. The present invention relies on the use of a liquid resin comprising cyanoacrylate-based monomers and of acidic inhibitors of their photopolymerization.

### TECHNICAL BACKGROUND

Three-dimensional printing - also known as additive manufacturing processes - are methods of printing three-dimensional articles. These articles may be obtained from photosensitive powder, liquid or molten starting materials. Particularly, they may be obtained from resins such as monomers, being photopolymerizable at room temperature.

Different methods have been developed, including those based on the layer-by-layer approach.

The layer-by-layer approach can be implemented via a "top down" "point-by-point" serial processing method, *e.g*. fused deposition modeling, selective laser sintering, etc.

Alternatively, the layer-by-layer approach can be implemented via a "bottom-up" "slice-at-a-time" serial processing method, in which a layer of resin is polymerized using for example a digital light projector or a LCD mask combined with a light source, or by a stereolithographic method. A suitable device comprises at least a tank, a movable platform and a light source. The base of the tank comprises a bottom wall, which is optically transparent, hereby forming a window. The transparent window may be a durable transparent plastic film. The top surface of the transparent window, within the tank, may be a non-stick surface. The light source may be a digital light projector, a LED light source or any other suitable light source. When a LED light source is used, a mask may be interposed between the light source and the base of the tank. The light source is located below the tank, and emits light being transmitted through the transparent window. The platform comprises a bottom flat surface, facing the transparent window, and being generally positioned in a X-Y horizontal plane. The platform is movably mounted in the tank and may move up and down along a Z vertical axis.

A bath of liquid polymerizable resin is contained within the tank, and the platform is submerged in the liquid resin and moved downwards to the lowest position, at a specific distance between its bottom surface and the top surface of the transparent window. The zone - so-called "polymerization zone" - formed between both surfaces is filled with liquid resin. Upon exposure to light, the first solidified layer is formed in the polymerization zone and adheres to the bottom surface of the platform, while not adhering to the top surface of the transparent window. Absent from any light, the build platform incrementally moves upwards, to create a new polymerization zone between the bottom surface of the solidified layer and the top surface of the transparent window, in which some liquid resin flows, for forming an additional layer of polymerized resin upon light exposure. The incremental move of the platform and the light exposure is repeated as often as necessary to obtain the solid three-dimensional article. If necessary, the platform may be moved incrementally further than the distance needed for forming a layer of polymerized resin, for ensuring that a sufficient and homogenous volume of resin flows to the polymerization zone, before being moved downwards again to the distance, which is suitable for forming a layer of polymerized resin.

The "slice-at-a-time" serial processing method allows obtaining satisfactory three-dimensional articles. However, this method is laborious and time-consuming, and has also several additional drawbacks. For example, the layer stratification may be visible under powerful magnification, or even to the naked eye. The 3D article may exhibit some anisotropy in mechanical properties. The aesthetics may be compromised, particularly for the surfaces angled in the Z axis. The 3D article may also have defects, particularly caused by the up and down movements of the platform.

Alternative methods, based on the principle of continuous 3D printing, have been developed, particularly for tackling the drawbacks associated with the up and down movements of the platform.

PCT application WO 2014/126834 A1 published on 21st August 2014 and the article entitled "Continuous liquid interface production of 3D objects" by from J. R. Tumbleston et al., Sciencexpress (2015) describe the method called "continuous liquid interface printing (CLIP)". In the CLIP method, the need for the repeated up and down movements of the platform is avoided. The CLIP method is based on the continuous presence of liquid resin in the zone formed between the bottom surface of the platform/article and the top surface of the transparent window. This is achieved by balancing the inhibition and the initiation of the photopolymerization in this zone, via a decreasing gradient of an inhibitor of polymerization from the top surface of the transparent window to the bottom surface of the platform/article. This zone is therefore divided into two different zones that merge *i.e.* the polymerization zone per se and a so-called "dead zone" located in the vicinity of the top surface of the transparent window, wherein the inhibitor is present at a sufficient concentration for inhibiting the photopolymerization. At a threshold distance from the top surface of the transparent window, roughly demarcating the dead zone from the polymerization zone, the photopolymerization is no longer inhibited. The 3D article can be printed continuously, instead of step-by-step. PCT application WO 2014/126834 A1 describes alternative photoinhibition/photopolymerization systems *i.e.* one system wherein the liquid resin comprises a free radical polymerizable liquid resin and the inhibitor comprises oxygen (e.g. air, gas enriched in oxygen or pure oxygen gas), and another system wherein the liquid resin comprises an acid-catalyzed or cationically-polymerizable liquid resin and the inhibitor comprises a base (e.g. ammonia, trace amines or carbon dioxide). The inhibitor may be provided to the bath of liquid resin through a window made of a material permeable to the inhibitors of polymerization, *e.g*. semipermeable fluoropolymers, rigid gas-permeable polymers, porous glass, or combinations thereof. J. R. Tumbleston *et al.* describes a method, wherein oxygen diffuses through the window and into the resin, but decays with distance from the window, so that photoinitiation overpowers oxygen-inhibiting at some distance from the window. Hence, at the threshold distance where all oxygen is consumed and initiating free radicals still exist, polymerization begins. This method allows the much faster manufacturing 3D articles showing no layer stratification and anisotropy.

PCT application WO 2015/164234 A1 published on 29th October 2015 also describes an alternative CLIP method, wherein the tank is filed with two layers of liquids. The top layer comprises the liquid resin, and a bottom layer comprises an immiscible liquid, which is immiscible, but wettable with the resin and has a density greater than the resin. Inhibitors of polymerization e.g. oxygen, bases or organic compounds may also be used.

PCT application WO 2016/172784 A1 published on 3rd November 2016 describes the method called "Intelligent Liquid Interface (ILI)". The ILI method does not rely on the provision of inhibitors of polymerization. Instead, the top surface of the optically transparent bottom wall of the tank is coated with a wettable material *e.g*. a silicone hydrogel. A dead zone is formed atop the wettable material, as a result of the intermolecular forces of repulsion between the wettable material and the resin, or as a result of the formation of a layer of water (present in the wettable material), in which the resin is immiscible. The US application 2018/0207867 A1 published on 26th July 2018 describes a method, wherein the optically transparent portion is covered by a layer gradually releasing a liquid lubricant. The US application 2017/0129175 A1 published on 11th May 2017 describes an ILI method, wherein the wettable membranes are movable and not static.

PCT application WO 2018/208378 published on 15th November 2018, the article entitled "Volumetric 3D printing of elastomers by tomographic backprojection" by D. Loterie (2018) and the article entitled "Volumetric additive manufacturing via tomographic reconstruction" by B. E. Kelly et al., Science (2019) describe the method called "Computed Axial Lithography (CAL)", based on a volumetric continuous printing. In the CAL method, the resin is contained within a rotatable, optically transparent tank. It may comprise free radical polymerizable liquid resin and oxygen, which acts as an inhibitor of photopolymerization. Light projections are simultaneously directed at a plurality of angles. The superposition of exposures from different angles results in a 3D energy dose which is sufficient to photopolymerize the resin in the desired geometry.

The article entitled "Two-color single-photon photoinitiation and photoinhibition for subdiffraction photolithography" by T. F. Scott et al., Science (2009), US application 2012/0092632 A1 published on 19th April 2012 and the article entitled "Rapid, continuous additive manufacturing by volumetric polymerization inhibition patterning" by M. P. de Beer et al., Science Advances (2019) describe a dual-wavelength volumetric photopolymerization method. In this method, one wavelength is used to photochemically activate the polymerization, while a second wavelength is used to inhibit that reaction. M. P. de Beer *et al.* also discloses hexaarylbiimidazoles as radical polymerization photoinhibitors.

EP 3 124 509 A1 discloses building a 3D item layer by layer using a cyano-acrylate-based monomers. Continuous 3D printing methods are advantageous over methods based on the layer-by-layer approach, particularly due to their speed of article formation and the quality of the printed parts. Many of these methods rely on the use of inhibitors of photopolymerization, particularly inhibitors for free radical polymerizable liquid resin, such as oxygen or air. Indeed, irrespective of the types of polymerizable liquid resins used for example in CLIP methods - including polyurethane, epoxy, cyanate ester, and silicone resins - all depend on oxygen inhibited acrylic cures. However, the use of such liquid resins is associated with several drawbacks. Firstly, the sensitivity of these liquid resins to radical polymerization is inconvenient, and usually requires selling them as two-part formulations, to limit their instability during storage. Secondly, these liquid resins should be finely tuned to function when balancing inhibition by oxygen diffusion. Thirdly, the oxygen diffusion varies as a function of the resin viscosity, and therefore needs to be adjusted depending on resin type and its pot life. Fourthly, costly specialized membranes with high permeability to air and transparency are required to form the optically transparent portion.

There is thus a need for providing a 3D printing method, particularly a continuous 3D printing method, being independent from photoinhibition by oxygen or air. There is also the need for providing a 3D printing method enabling the printing of 3D articles that do not exhibit stratification. There is also the need for providing a 3D printing method enabling the printing of 3D articles having no surface-tackiness, whether used in continuous linear approach, or in volumetric approach or in layer-by-layer approach. There is also the need to supply shelf-stable one-part liquid resin systems with long lifetime storage. There is also the need for providing a 3D printing method that can exploit relatively simple equipment without the need for special hardware e.g. to provide or transport gases.

### SUMMARY OF THE INVENTION

It is a first object of the invention to provide a method for printing a three-dimensional (3D) article, the method being recited in claim 1.

In some embodiments, the method is a layer-by-layer 3D printing method or a continuous 3D printing method; preferably a continuous 3D printing method being a continuous linear 3D printing method or a continuous volumetric 3D printing method; more preferably the method is selected from the group consisting of the continuous liquid interface printing method (CLIP method), the intelligent liquid interface method (ILI method), the computed axial lithography method (CAL method), the dual-wavelength volumetric photopolymerization method, and the methods derived therefrom.

In some embodiments, the cyanoacrylate-based monomers are selected from the group consisting of mono-functional cyanoacrylate monomers, multi-functional cyanoacrylate monomers including bifunctional cyanoacrylate monomers, hydrid cyanoacrylate monomers, and mixtures thereof.

In some embodiments, the acidic inhibitors are selected from the group consisting of Lewis acids, Bronsted acids, acids provided from an acidic ion exchange material or *in situ* photogenerated acids.

In some embodiments, the acidic inhibitors diffuse to the volume of liquid resin from/through the optically transparent portion.

In some embodiments, the acidic inhibitors diffuse to the volume of liquid resin from a separate compartment.

In some embodiments, the acidic inhibitors are in contact with the volume of liquid resin from a liquid or wettable, optically transparent material overlying the inner surface of the optically transparent portion of the tank.

In some embodiments, it is provided a resin-immiscible liquid, also held in the tank, wherein the acidic inhibitors are in contact with the liquid resin at the interface with the resin-immiscible liquid.

In some embodiments, additional light is emitted and transmitted to the liquid resin, and acidic inhibitors are generated in the volume of liquid resin by the additional light.

In some embodiments, the liquid resin comprises, as the photoinitiator, a combination of metallocene compounds and radical photoinitiators.

In some embodiments, the liquid resin comprises additional photopolymerizable monomers, preferably (meth)acrylate monomers.

It is a second object of the invention to provide a three-dimensional printing system as recited in claim 11.

The present invention makes it possible to overcome the drawbacks of the prior art. The invention provides a 3D printing method, particularly a continuous 3D printing method, being independent from photoinhibition by oxygen or air, and not relying on radical photopolymerization as the principle method of initiation, contrary to conventional liquid resins. In corollary, the invention provides a 3D printing method using a liquid resin being easily stored, *i.e.* not needing any specific packing conditions such as multicompartment formulations and/or having a limited shelf-life due to instability. The invention also provides a 3D printing method enabling the printing of 3D articles that do not exhibit stratification. The invention also provides a 3D printing method enabling the printing of 3D articles having no surface-tackiness whether used in continuous linear approach or in volumetric approach or layer-by-layer approach. The invention also provides a 3D printing method that can exploit relatively simple equipment without the need for special hardware e.g. to provide or transport gases.

The inventors have shown that liquid resins comprising cyanoacrylate-based monomers are uniquely adaptable to 3D printing methods, particularly to continuous 3D printing methods, in a variety of modes with very simple and low-cost equipment and that the physical properties of the printed objects can be readily modified.

### DESCRIPTION OF THE FIGURES

Figures 1A and 2A are photographs under electron microscopy of 3D articles according to example 1
Figures 1B and 2B are photographs under optical contour mapping of 3D articles according to example 1
Figure 3 is a schematic representation of the tank according to example 2
Figure 4 is a schematic representation of the system according to example 3
Figure 5 is a schematic representation of the tank according to example 4
Figure 6 is a schematic representation of the system according to example 5
Figure 7 is a photograph of a 3D article printed according to example 6
Figure 8 is a graph showing the heat output due to the exotherm of the initiated polymerization (Y axis) as a function of time (Z axis), according to example 8
Figure 9 is a graph showing the heat output due to the exotherm of the initiated polymerization (Y axis) as a function of time (Z axis), according to example 10

### DESCRIPTION OF EMBODIMENTS

The invention will now be described in more detail without limitation in the following description.

Throughout the description, all the percentages of the various constituents of the composition are given by weight (%w/w), except if mentioned otherwise. The concentration ranges have to be considered as including the limits.

The expressions "printing method (method for printing)" and "manufacturing method (method for manufacturing)" are used interchangeably presently. Likewise, the expressions "printing system" and "manufacturing system" are used interchangeably presently.

The present invention relates to a method for printing a three-dimensional article and the corresponding three-dimensional printing system and use thereof, as well as related 3D articles.

### 3D printing method

The inventors have demonstrated the great versatility of using a liquid resin comprising cyanoacrylate-based monomers, photoinitiators and acidic inhibitors. Indeed, a liquid resin comprising cyanoacrylate-based monomers can be used in conventional 3D printing systems with or without simple modifications. In addition, the acidic inhibitors can be supplied in any form and manner. The suitable acidic inhibitors may therefore be selected depending on the 3D printing method used.

The 3D printing method may be a layer-by-layer 3D printing method. Alternatively and preferably, the 3D printing method may be a continuous 3D printing method, particularly a continuous linear 3D printing method or a continuous volumetric 3D printing method. Without wishing to be exhaustive, the continuous 3D printing method may be selected from the group consisting of the continuous liquid interface printing method (CLIP method), the intelligent liquid interface method (ILI method), the computed axial lithography method (CAL method), the dual-wavelength volumetric photopolymerization method, and the methods derived therefrom. The CAL method and the dual-wavelength volumetric photopolymerization method are referred presently as "volumetric printing methods".

The 3D printing method may be implemented by the printing system described herein. The 3D printing method allows the printing of 3D articles made of polycyanoacrylate.

### Printing system

The present invention is not limited to the design of the printing system, as far as the acidic inhibitor can effectively inhibit the photopolymerization outside the polymerization zone.

### Tank

A tank is provided. The tank comprises at least one compartment for holding the liquid resin. The tank comprises a bottom wall and at least one side wall. The tank may open or closed at its top. The tank may have any suitable shape, cross-section and dimensions. For example, the bottom wall may have a cross-section being circular, square or rectangular. If the cross-section of the bottom wall is circular, the tank may have one circumferential cylindrical side wall. If the cross-section of the bottom wall is square or rectangular, the tank may have four side walls. In continuous linear 3D printing methods such as in CLIP and ILI methods, the tank preferably has a square or rectangular cross-section. In volumetric 3D printing methods, the tank preferably has a circular cross-section and forms a cylinder.

The tank may be fixed or rotatably moveable. In continuous linear 3D printing methods such as in CLIP and ILI methods, the tank is preferably fixed. In volumetric 3D printing methods, the tank is preferably rotatably moveable around a vertical Z axis.

### Optically transparent portion

The tank comprises at least one optically transparent portion. The optically transparent portion is located on the bottom wall, on the side walls, or both. In continuous linear 3D printing methods such as in CLIP and ILI methods, the optically transparent portion is located on the bottom wall of the tank. In volumetric 3D printing methods, that are not according to the claims, the optically transparent portion is preferably located on the side wall of the tank.

The inner surface of the optically transparent portion, in contact with the liquid resin, may be treated for preventing adhesion of the polymerized resin on it. For example, a fluorinated coating in the form of a transparent impermeable plastic sheet may be applied. Alternatively, as described in the US application 2017/0028618 A1, high-density, immiscible perfluorinated liquids may be disposed atop the inner surface of the optically transparent portion. Perfluorinated liquids may be perflourinated sulfonic acids (also known as perfluorinated octanesulfonic acid or PFOS).

The material forming the optically transparent portion may be selected depending on the properties expected. For example, the optically transparent portion may be made in a material being permeable to the acidic inhibitors.

### Partition wall

The tank may comprise a partition wall, for dividing the tank into two compartments *i.e*. a top compartment and a bottom compartment. The top compartment may hold the liquid resin, while the bottom compartment may hold another liquid *e.g*. a solution of acidic inhibitor.

The partition wall may be nonpermeable to the liquid resin, but permeable to acidic inhibitors.

### Liquid or wettable, optically transparent material

The tank may comprise a liquid or wettable, optically transparent material, such as a membrane overlying the inner surface of the optically transparent portion of the tank.

This material may comprise acidic inhibitors derived from acids or acid groups. It may alternatively be continuously fed by a source of acid.

### Light source

A light source is provided. The light source emits light from one or a plurality of elements.

The light source is located outside the tank, in a position suitable for allowing the transmission of the light to the volume of liquid resin, particularly the photopolymerization zone, through the optically transparent portion.

The light may be continuously emitted and transmitted, for continuously photopolymerizing the liquid resin.

In continuous 3D printing methods such as in CLIP, ILI and volumetric printing methods, the light is usually emitted and transmitted continuously. In the course of the printing, the light may be controlled for customizing the shape of the 3D article.

In continuous linear 3D printing methods such as CLIP and ILI methods, the light source is located below the tank, and the light is emitted and transmitted through the optically transparent portion located in the bottom wall of the tank. If the tank comprises a bottom compartment and a top compartment, the light is also emitted and transmitted through the optically transparent partition wall.

In the volumetric 3D printing methods, the light source(s) may be located, to one side of the tank.

The light source emits light for polymerizing the liquid resin (polymerization light). The polymerization light may have a wavelength from 360 nm to 465 nm, preferably from 385 nm to 420 nm, more preferably from 405 nm to 415 nm.

In some printing methods, the light source may emit additional light for photoinhibiting the polymerization (inhibiting light). The additional light has different wavelength than the light for polymerizing the liquid. The photoinhibition light may have a wavelength from 300 nm to 500 nm, preferably from 350 nm to 450 nm, more preferably from 360 nm to 410 nm. The wavelength of the polymerization light and the wavelength of the additional light, which are different from each other, depend on the liquid resin and the type of polymerizable monomers. In these printing methods, even though photoinitiating and photoinhibiting wavelength ranges may be similar, it is understood that the selected wavelengths for initiating and inhibiting must not interfere or be the same.

### Light-controlling device

A light-controlling device is usually provided. This device may be part of the light source or independent to it. For example, the light-controlling device may be a digital light projector, a LCD mask, a shutter or a scanned laser.

When independent from the light source such as the mask or the shutter, the light-controlling device is interposed between the light source and the external surface of the optically transparent portion. The mask and the shutter may be useful for giving a specific pattern and/or intensity to the light, in order to photopolymerize the resin in a specific shape. Alternatively, the light pattern may be created directly by the so-called stereolithographic approach (SLA).

The use of a light-controlling device helps obtaining 3D articles having more or less complex shapes.

### Platform

A movable platform is provided, usually moveably mounted on an arm, for allowing moving the platform up and down.

Usually, continuous 3D printing methods such as CLIP and ILI methods comprise a platform, which is submerged in the liquid resin. The first layer of photopolymerized resin is formed on and adheres to the bottom surface of the platform, which is facing the top surface of the optically transparent portion.

Volumetric printing methods generally do not utilize a platform but print 3D articles in the volume of the liquid resin that are self-supporting or may be printed atop or around an inserted substrate.

### Liquid resin

A volume of a liquid resin is provided. The volume of liquid resin is held in the tank.

The liquid resin is held in the compartment formed by tank. If a partition wall is present, the liquid resin is held in the top compartment of the tank.

The liquid resin comprises cyanoacrylate-based monomers.

The volume of the liquid resin defines a polymerization zone. By "polymerization zone" is meant a specific zone of the volume of the liquid resin, where the polymerization happens when the necessary conditions for photopolymerization are met *e.g*. light intensity and/or no photoinhibition. The polymerization zone may vary depending on the printing method used. For example, in the CLIP method, the polymerization zone is particularly demarcated by the bottom surface of the platform/article and the top surface of the optically transparent portion of the tank. In the CAL method, the polymerization zone is demarcated by the pattern formed by the light.

The liquid resin has a suitable viscosity. Particularly, the liquid resin may have a viscosity from 2 mPa.s to 100,000 mPa.s. In continuous 3D printing methods such as such as CLIP and ILI methods, the liquid resin may have a viscosity from 10 mPa.s to less than 10,000 mPa.s, preferably from 10 mPa.s to 2,000 mPa.s; or alternatively gel-like viscosities may also be deployed with viscosities from 10,000 cPs to 100,000 cPs. In volumetric 3D printing methods, the liquid resin preferably has a viscosity from 100 cPs to 100,000 cPs. Viscosity is measured using a Brookfield DV2T Viscometer with a thermostatic chamber equilibrated at 25°C. The spindles and shear rate are chosen to suit viscosity ranges, thus 1.5 r.p.m using spindle 14 for high viscosity range and 50 r.p.m. using spindle 21 for low viscosity range.

The liquid resin may be at a temperature from 20°C to 70°C.

In some embodiment, the liquid resin is at room temperature. By "room temperature" is meant a temperature from 18 °C and 25 °C.

In some embodiments, the liquid resin is at temperature higher than the liquid resin, such as a temperature from 35°C to 75°C. In such case, a heating device is provided.

### Cyanoacrylate-based monomers

The liquid resin comprises cyanoacrylate-based monomers, which are photopolymerizable monomers. Cyanoacrylate (CA) is the generic name given to a family of alpha-nitrile substituted acrylic esters that are rapidly polymerisable.

Cyanoacrylate-based monomers are particularly suitable for an anionic or a zwitterionic polymerization. The mechanism of anionic polymerization is described in the article by Pepper et al., J. Polym. Sci: Polymer Symposium 62, 65-77 (1978) and the article entitled "Zwitterionic polymerization of butyl cyanoacrylate by triphenylphosphine and pyridine" by Cronin et al., Makromol. Chem., 189, 85, (1988). To be specific, the mechanism of the photopolymerisation of cyanoacrylate monomers is initiated by electron-rich species that have been photogenerated.

The inventors have surprisingly demonstrated that satisfactory printing methods may be developed, using liquid resins different from conventional liquid resins i.e. liquid resins comprising acrylate monomers. Indeed, the photopolymerization of acrylate monomers is based on free radical polymerization. However, free radical polymerization is inhibited by oxygen (air). Even though the oxygen inhibition of free radical photopolymerization has been used in some printing methods such the CLIP method, it has drawbacks. Particularly, the printed 3D articles usually show surface-tackiness, therefore requiring post-processing to render them dry-to-touch. In contrast, by using cyanoacrylate-based monomers, the inventors have demonstrated that 3D articles being tack-free, or having at least a limited surface-tackiness, could be printed, without impairing the efficacy of the photopolymerization. Additionally, the inventors have demonstrated no layering (stratification) phenomena occurs, when using liquid resin comprising cyanoacrylate-based monomers, especially in 3D printing methods based on the layer-by-layer approach.

Cyanoacrylate-based monomers may be mono-functional cyanoacrylate monomers, multi-functional cyanoacrylate monomers including bifunctional cyanoacrylate monomers, hydrid cyanoacrylate monomers, and mixtures thereof. Hybrid cyanoacrylate monomers are cyanoacrylate-based monomers comprising at least one additional moiety other than a cyanoacrylate moiety, preferably with the capacity to polymerize or react from the additional moiety e.g. monomers comprising a cyanoacrylate moiety and a (meth)acrylate moiety, or monomers comprising a cyanoacrylate moiety and a isocyanate moiety. Using multi-functional cyanoacrylate monomers and/or hydrid cyanoacrylate monomers, in addition to or instead of mono-functional cyanoacrylate monomers, may help obtaining polymers with improved properties through secondary reactions such as crosslinking, condensations and/or copolymerization that contribute to durability, toughness, flexibility, etc.

Monofunctional cyanoacrylate monomers have the chemical formula (I): 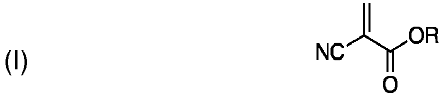 wherein R may be selected from the group consisting of an alkyl group or an alkoxyalkyl group. The alkyl group may be selected from the group consisting of methyl, ethyl, butyl, or 2-octyl. The alkoxyalkyl group may be selected from the group consisting of 2-methoxyethyl, 2-ethoxyethyl, or 2-(1-methoxy)propyl.

An exemplary monofunctional cyanoacrylate monomer is ethyl cyanoacrylate (ECA), wherein R = C₂H₅. While being suitable for use in the present invention, ECA is least preferred in view of its volatility, its odor and its staining potential. In some embodiments, the liquid resin is free of ethyl cyanoacrylate.

Other exemplary monofunctional cyanoacrylate monomers are 2-methoxyethyl cyanoacrylate (MECA), wherein R = CH₂CH₂OCH₃; 2-ethoxyethyl cyanoacrylate (EECA), wherein R = CH₂CH₂OC₂H₅; and 2-(1-methoxy)propyl cyanoacrylate (MPCA), wherein R = CH(CH₃)CH₂OCH₃. MECA is particularly suitable for use in the present invention, considering its odorless, non-lachrymatory, non-irritant and non-staining properties. A high-yield process for preparing MECA and related cyanoacrylates is disclosed in the US application 9,670,145 published on 26th January 2017.

Monofunctional cyanoacrylate monomers are well known in the art. See for example the review entitled "Adhesives Technology Handbook" by from S. Ebnesajjad Ed., William Andrew, Norwich (2008).

Multifunctional cyanoacrylate monomers, including bifunctional cyanoacrylate monomers, are disclosed in the article entitled "Unequivocal Synthesis of Bis(2-cyanoacrylate) Monomers. Via Anthracene Adduct" by C. Buck, J. Polymer Sci, Polym. Chem Edition, Vol 16, 2475, (1978).

Bifunctional cyanoacrylate monomers may have the chemical formula (II): 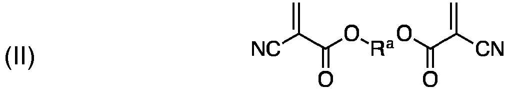 wherein R^{a} is selected from the group consisting of -(CH₂)ₙ with n = 2 to 12, -CH₂(C(CH₃)₂CH₂)-, -CH(CH₃)CH₂CH₂CH(CH₃)-, -CH₂C₆H₄CH₂- including 1,3- or 1,4-disubstituted aromatic), -(CH₂)₄O(CH₂)₄-, -CH₂(CF₂)₃CH₂-, - CH₂Si(CH₃)₂OSi(CH₃)₂CH₂-, -CH₂CH=CHCH₂- or -CH₂C≡CCH₂-.

Hybrid cyanoacrylate monomers may have the chemical formula (III): 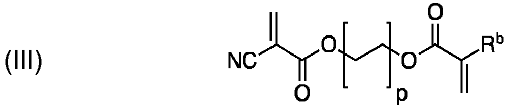 wherein R^{b} is -H or -CH₃; and wherein p is 1.

Hydrid cyanoacrylate monomers may have the chemical formula (IV): 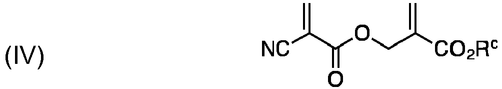 wherein R^{c} is -CH₃ or -C₂H₅.

The cyanoacrylate-based monomers may be selected depending on the 3D article to be printed, considering their specific properties including their solubility or insolubility, their toughness, their flexibility, their rigidness, their resistance, etc.

As defined herein before, the cyanoacrylate-based monomer may be selected from the group consisting of monomers of structure (I), monomers of structure (II), monomers of structure (III), monomers of structure (IV), and mixtures thereof.

The cyanoacrylate-based monomers may be low-odor or odorless monomers such as alkoxyalkyl cyanoacrylate esters.

The cyanoacrylate-based monomers may be low-staining or non-staining monomers.

The cyanoacrylate-based monomers may be selected from the group consisting of 2-methoxyethyl cyanoacrylate, 2-ethoxyethyl cyanoacrylate, 2-(1-alkoxy)propyl cyanoacrylate, 2-(2'-alkoxy)-methoxyethyl-2"-cyanoacrylate, 2-(2'-alkoxy)-ethoxyethyl-2"-cyanoacrylate, 2-(2'-alkoxy)-propyloxypropyl-2"-cyanoacrylate, 2-(2'-alkoxy)-butyloxybutyl-2"-cyanoacrylate, 2-(3'-alkoxy)-propyloxyethyl-2"-cyanoacrylate, 2-(3'-alkoxy)-butyloxyethyl-2"-cyanoacrylate, 2-(3'-alkoxy)-propyloxypropyl-2"-cyanoacrylate, 2-(3'-alkoxy)-butyloxypropyl-2"-cyanoacrylate, 2-(2'-alkoxy)-ethoxypropyl-2"-cyanoacrylate, 2-(2'-alkoxy)-ethoxybutyl-2"-cyanoacrylate, *n*-butyl cyanoacrylate, *sec*-butyl cyanoacrylate, iso-butyl cyanoacrylate, *n*-pentyl cyanoacrylate, 1-methylbutyl cyanoacrylate, 1-ethylpropyl cyanoacrylate, *n*-hexyl cyanoacrylate, 1-methylpentyl cyanoacrylate, *n*-heptyl cyanoacrylate, *n*-octyl cyanoacrylate, *2*-octyl cyanoacrylate, 2-ethylhexyl cyanoacrylate, *n*-nonyl cyanoacrylate, *n*-decyl cyanoacrylate, *n-*undecyl cyanoacrylate, *n*-dodecyl cyanoacrylate, cyclohexyl cyanoacrylate, n-octadecyl cyanoacrylate, trimethylsilyethyl cyanoacrylate, trimethylsilypropyl cyanoacrylatetrimethylsilyloxyethyl cyanoacrylate triethylsilyloxyethyl cyanoacrylate phenylethyl cyanoacrylate, phenoxyethyl cyanoacrylate, and mixtures thereof; preferably from the group consisting of 2-(2'-alkoxy)-methoxyethyl-2"-cyanoacrylate, 2-(2'-alkoxy)-ethoxyethyl-2"-cyanoacrylate, and mixtures thereof; more preferably the group consisting of 2-(2'-alkoxy)-methoxyethyl-2"-cyanoacrylate.

If present, the alkoxy group is selected from the group consisting of methoxy, ethoxy, propyloxy, butyloxy, pentyloxy or hexyloxy.

A suitable 2-(1-alkoxy)propyl cyanoacrylate may be 2-(1-methoxy)propyl cyanoacrylate. A suitable 2-(2'-*alkoxy*)-methoxyethyl-2"-cyanoacrylate may be 2-(2'-methoxy)-methoxyethyl-2"-cyanoacrylate. Suitable 2-(2'-alkoxy)-ethoxyethyl-2"-cyanoacrylates may be 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate, 2-(2'-hexyloxy)-ethoxyethyl-2"-cyanoacrylate. Suitable 2-(2'-alkoxy)-propyloxypropyl-2"-cyanoacrylates may be 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate, 2-(2'-hexyloxy)-propyloxypropyl-2"-cyanoacrylate. Suitable 2-(2'-alkoxy)-butyloxybutyl-2"-cyanoacrylates may be 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate. A suitable 2-(3'-alkoxy)-propyloxyethyl-2"-cyanoacrylate may be 2-(3'-methoxy)-propyloxyethyl-2"-cyanoacrylate. A suitable 2-(3'-alkoxy)-butyloxyethyl-2"-cyanoacrylate may be 2-(3'-methoxy)-butyloxyethyl-2"-cyanoacrylate. A suitable 2-(3'-alkoxy)-propyloxypropyl-2"-cyanoacrylate may be 2-(3'-methoxy)-propyloxypropyl-2"-cyanoacrylate. A suitable 2-(3'-methoxy)-butyloxypropyl-2"-cyanoacrylate may be 2-(3'-alkoxy)-butyloxypropyl-2"-cyanoacrylate. A suitable 2-(2'-alkoxy)-ethoxypropyl-2"-cyanoacrylate may be 2-(2'-methoxy)-ethoxypropyl-2"-cyanoacrylate. A suitable 2-(2'-alkoxy)-ethoxybutyl-2"-cyanoacrylate may be 2-(2'-methoxy)-ethoxybutyl-2"-cyanoacrylate.

An exemplary cyanoacrylate monomer is 2-methoxyethyl cyanoacrylate.

Suitable processes for preparing cyanoacrylate-based monomers are particularly disclosed in the US patent US 2,467,927 and in the US patent US 9,670,145.

The liquid resin may comprise from 45 to 100% by weight, preferably from 70 to 98% by weight, more preferably from 90 to 98% by weight, of cyanoacrylate-based monomers, by total weight of the liquid resin.

The liquid resin may comprise from 1 to 25 % by weight, preferably from 3 to 15% by weight, more preferably from 5 to 10% by weight, of multifunctional cyanoacrylate monomers and/or hydrid cyanoacrylate monomers, by total weight of the polymerizable monomers.

### Additional photopolymerizable monomers

In addition to cyanoacrylate monomers, the liquid resin may also comprise additional photopolymerizable monomers, preferably (meth)acrylate monomers. US application 2018/215973 describes suitable (meth)acrylate monomers.

The (meth)acrylate monomers may be selected from the group consisting of monofunctional (meth)acrylate monomers, polyfunctional acrylate monomers, and mixtures thereof. The monofunctional (meth)acrylate monomers may be selected from linear or branched alkyl, alkoxylakyl, furfuryl, isobornyl, glycidyl, or phenoxyethyl, esters and the cyclic and heterocyclic esters. Suitable monofunctional acrylate monomers are commercially available under the denominations SR-531, SR-789 from Sartomer. The polyfunctional (meth)acrylate monomers may be selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, dipentaerythritolhexa(meth)acrylate, bisphenol-A-diacrylate, bisphenol-A-dimethacrylate, ethoxylatedbisphenol-A-diacrylate, propoxylatedbisphenol-A-diacrylate, and mixtures thereof. Polyfunctional (meth)acrylic esters may be of relatively low molecular weight such as the commercially available, triethylene oxide dimethacrylate, or butanedioldimethacrylate, or may be of higher molecular weight: (meth)acrylic functionalized oligomers and (meth)acrylic functionalized resins, for example (meth)acrylic ester terminated polymers, such as (meth)acrylic terminated polyesters or urethane polymers or copolymers or so-called (meth)acrylic ester functionalised telechelic, dendrimeric or hyperbranched materials. Suitable (meth)acrylic monomers are commercially available from Sartomer, Arkema and BASF, such as for example SR-341, SR-508 and SR-834 from Sartomer.

The liquid resin may comprise from 5 to 50% by weight of additional photopolymerizable monomers, by total weight of the mixtures of photopolymerizable monomers.

In an alternative embodiment, the liquid resin may be substantially free of photopolymerizable monomers other than cyanoacrylate-based monomers. By "substantially free of' is meant a liquid resin comprising 1 % by weight or less, preferably 0.1 % by weight or less, more preferably 0.01 % by weight or less, most preferably 0 % by weight (free), of additional photopolymerizable monomers by total weight of the liquid resin.

### Resin-immiscible liquid

A resin-immiscible liquid may be provided.

This liquid is immiscible to the liquid resin, particularly to the cyanoacrylate-based monomers.

When present, the resin-immiscible liquid is held in the tank, and both the liquid resin and the resin-immiscible liquid forms a bilayer volume, wherein the latter is below the former.

The resin-immiscible liquid may comprise acidic inhibitors or be inherently acidic.

### Acidic inhibitors

The printing system comprises a source of acidic inhibitors, for providing acidic inhibitors to the liquid resin.

In the present application the terms "inhibitors of photopolymerization" and "stabilizers of photopolymerization" are used interchangeably. The acidic inhibitors aim at preventing the polymerization outside the polymerization zone.

The acidic inhibitors may be selected from the group consisting of Lewis acids, Bronsted acids, acids provided from an acidic ion exchange material or photoacids obtained from photoacid generators (also known as PAGs).

Lewis acids are non-protonic acids, which may be selected from the group consisting boron trifluoride and derivatives, fluoroboric acid, sulphur dioxide, and mixtures thereof; preferably from the group consisting of boron trifluoride, boron trifluoride etherate complex, boron trifluoride dihydrate complex, boro trifluoride tetrahydrofuran complex, trimethylsilyl triflate, sulphur dioxide, and mixtures thereof; more preferably the Lewis acid is etherate complex. In some embodiments, Lewis acids preferably are volatile acids such as boron trifluoride or its complexes or sulphur dioxide.

Bronsted acids may be selected from the group consisting of alkyl sulfonic acids such as methanesulfonic acid, ethanesulfonic acid, *p-*toluenesulfonic acid, (linear or) alkylbenzene sulfonic acid, hydrofluoric acid, trichloro- or trifluro- acetic acids; preferably sulfonic acids; more preferably methane sulfonic acid.

Acids provided from an acidic ion exchange material, such as a membrane, may be in the form of free sulfonic acids. Hence, the cyanoacrylate-based monomers may be inhibited by intimate contact with a separate substance comprising sulfonic acids groups during the printing method.

Photoacid generators may be selected from the group consisting of phenyl-substituted onium salts, arylsulfonate esters, o-nitrobenzyl-based PAG, imino and imidosulfonates, merocyanine-based PAG, terarylene-based PAG, and mixtures thereof. Phenyl-substituted onium salts, with anions that produce superacids, may be selected from the group consisting of bis(4-*tert-*butylphenyl)iodonium hexafluorophosphate, cyclopropyldiphenylsulfonium tetrafluoroborate, dimethylphenacylsulfonium tetrafluoroborate, diphenyliodonium hexafluorophosphate, diphenyliodonium hexafluoroarsenate, diphenyliodonium trifluoromethane sulfonate, 4-isoproyl-4'-methyldiphenyliodonium tetrakis(pentafluorophenyl)borate, 4-nitrobenzenediazonium tetrafluoroborate, triphenylsulfonium tetrafluoroborate, tri-*p*-tolylsulfonium hexafluorophosphate, tri-*p*-tolylsulfonium trifluoromethanesulfonate, bis(4-tert-butylphenyl)iodonium bis-perfluorobutanesulfonyl imide. Suitable Photoacid generators may be available from Fujifilm Wako Pure Chemical Co., and TCI America Chem Co. Bis(4-*tert-*butylphenyl)iodonium hexafluorophosphate is commercially available under the denomination Speedcure^{®} 938 from Lambson Ltd. In a preferred embodiment, phenyl-substituted onium salts can be used in the wavelength range of 350-2500 nm when used alone and/or in combination with photosensitizers (see examples in Progress in Polymer Science; Volume 65, February 2017, Pages 1-41). Hence, the cyanoacrylate-based monomers may be inhibited by the purposeful photogeneration of inhibiting acid during the printing process, particularly by ensuring that the wavelengths for photopolymerisation and photoinhibition are non-interfering.

The acidic inhibitors may be provided in any suitable manner. The source of acidic inhibitors may be present originally in the liquid resin, it may be located below the tank but be accessible to the tank contents, it may be inside the below compartment of the tank, it may be inside a liquid or wettable optically transparent material or it may be inside a resin-immiscible liquid. Whatever the sources of acidic inhibitors and their location, the acidic inhibitors should be provided to the liquid resin at a sufficient concentration for inhibiting the photopolymerization outside the polymerization zone.

The liquid resin comprises acidic inhibitors. In a preferred embodiment, the liquid resin comprises from 5 from 100 parts per million (ppm), more preferably from 8 from 90 ppm, still more preferably from 10 from 80 ppm, of acidic inhibitor by total weight of the liquid resin.

In some embodiments, the acidic inhibitors are present originally in the liquid resin. This is particularly suitable for volumetric 3D printing methods.

In some embodiments, acidic inhibitors may diffuse to the volume of liquid resin from/through a semipermeable membrane. The semipermeable membrane may be the optically transparent portion. In such case, the source of acidic inhibitors would be located below the tank. The semipermeable membrane may alternatively be a partition wall, if present. In such case, the source of acidic inhibitors would be located inside the lower compartment of the tank. In these embodiments, the acidic inhibitors may be volatile Lewis acids. Hence, the cyanoacrylate-based monomers are inhibited by the vapour of the Lewis acid during the printing process.

In another embodiment, the acidic inhibitors may be in contact with the volume of liquid resin from a liquid or wettable, optically transparent material overlying the inner surface of the optically transparent portion of the tank.

In another embodiment, a resin-immiscible liquid, also held in the tank, may be provided. The acidic inhibitors may be in contact with the liquid resin at the interface with the resin-immiscible liquid.

In another embodiment, additional light, having different wavelengths, may be emitted and transmitted to the liquid resin containing latent PAGs, and the acidic inhibitors may be thus generated in the volume elements (voxels) of liquid resin by said additional light.

### Photoinitiation

The liquid resin comprises a source of photoinitiators. Photoinitiators promote photopolymerization. The terms "photoiniator" and "photoinitiator system" are used interchangeably presently. A suitable photoinitiator system, part of which comprises radical photoinitiators, is disclosed in the PCT application WO 2017/021785 A1. Photoinitiators may also act directly on any additional photopolymerizable monomers, such as typical acrylates, that may be admixed with cyanoacrylate-based monomers in the liquid resin.

A suitable source of photoinitiators comprises a metallocene component (also called "synergist"), preferably a metallocene compound selected from the group consisting of 'sandwich compounds' such as ferrocene compounds, ruthenocene compounds, bis(cyclopentadieneyl) osmium compounds their derivatives thereof, and mixtures thereof; preferably the metallocene compound is a ferrocene compound, its derivatives thereof, and mixtures thereof.

The ferrocene compound of formula may be a compound of formula (V) 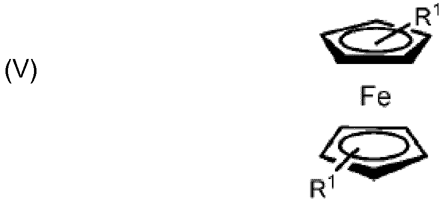 wherein R¹ is a hydrogen or a C₁₋₄ alkyl group, and wherein one or more R¹ are present in one or both rings. Suitable ferrocene compounds are disclosed in US patents 5,824,180 and 6,503,959.

The liquid resin may comprise from 100 to 1000 ppm (parts per million), preferably from 150 to 500 ppm, more preferably from 200 to 300 ppm, of a ferrocene compound of formula (V) by total weight of the liquid resin.

This suitable source of photoinitiators also comprises an additional photoinitiator.

The additional photoinitiator may be selected from the group consisting of phenyl-substituted acyl phosphines, alpha diketones, thioxanthones, alpha-hydroxy ketones, benzyldimethylketals, phenylglyoxylates, camphorquinone, acylgermane compounds, dialkylsilylglyoxylates, and mixtures thereof. The additional photoinitiators are particularly useful for increasing the speed of the polymerization of the cyanoacrylate-based monomers.

The acylgermane compound may be selected from the group consisting of the compounds of formula (VI) 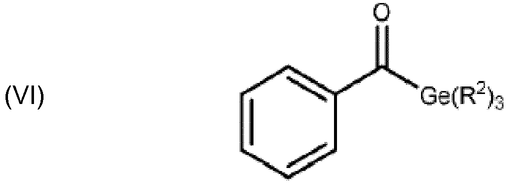
wherein R² is a methyl or a phenyl group;
the compounds of formula (VII) 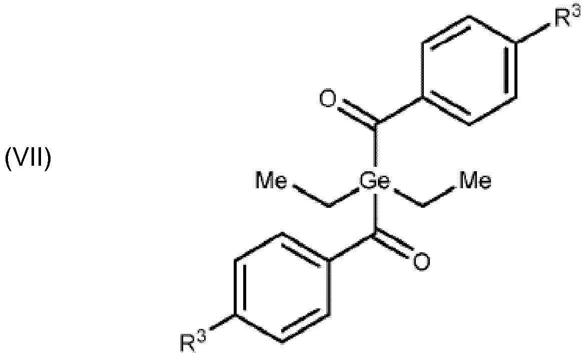
wherein R³ is hydrogen or a methoxy group; and,
mixtures thereof.

Suitable additional photoinitiators are commercially available under the denominations Irgacure^{®} 819 (BASF) or Darocur^{®} TPO (BASF) for phenyl-substituted acyl phosphines; Irgacure^{®} 184/500/2959 (BASF) or Darocur^{®} 1173 (BASF) for alpha-hydroxy ketones; Irgacure^{®} 651 (BASF) for benzyldimethylketals, Irgacure^{®} 754 (BASF) or Darocur^{®} MBF (BASF) for phenylglyoxylates; from Sigma-Aldrich Merck for camphorquinone; under the denomination Ivocerin^{™} from Ivoclar KGaA& AC Co. for acyl germane compounds; and from Sigma-Aldrich Merck for dialkylsilylglyoxylates.

In a preferred embodiment, the liquid resin comprises the combination of metallocene compounds and radical photoinitiators. Said combination transforms photoinitiation efficiency dramatically.

In another preferred embodiment, the liquid resin comprises a ferrocene compound of formula (V), and an acylgermane compound selected from the group consisting of the compounds of formulas (VI) and/or (VI); preferably the liquid resin comprises from 100 to 300 ppm of a ferrocene compound of formula (V), and from 600 to 900 ppm of an acylgermane compound selected from the group consisting of the compounds of formulas (VI) and/or (VI).

In another preferred embodiment, the liquid resin comprises a ferrocene compound of formula (V), and a camphorquinone.

The liquid resin may comprise from 0.1 to 2 % by weight, preferably from 0.5 to 2 % by weight, more preferably from 1 to 2 % by weight, of an additional photoinitiator by weight of the total composition.

### Additional compounds

The liquid resin may also comprise additional compounds, particularly compounds selected from the group consisting of radical stabilizers, photosentizers, etc.

### Radical stabilizers

The liquid resin may also comprise radical stabilizers.

The radical stabilizers may be selected from the group consisting of hydroquinone, hydroquinone monomethyl ether, hydroxytoluene butyl ether, hydroxyanisole, and mixtures thereof.

The liquid resin may comprise from 0.001 % to 0.2 % by weight, preferably from 0.005 % to 0.1 %, more preferably from 0.002 % to 0.06 % by weight, of radical stabilizers by total weight of the liquid resin.

### Photosensitizers

The liquid resin may also comprise a photosensitizer.

The photosensitizer may be thioxanthone compound. Suitable materials are commercially available under the denomination SpeedCure CPTX from Lambson Ltd. For example, 1-chloro-4-propyl thioxanthone is a suitable compound, that is sensitive in a wavelength range from 380 to 420 nm, preferably from 395 to 405 nm. It can be used in combination with bis(4-tert-butylphenyl)iodonium hexafluorophosphate.

The liquid resin may comprise from 0.1 % to 5 % by weight, preferably from 0.2 % to 3 %, more preferably from 0.5 % to 2.5 % by weight, of photosensitizers by total weight of the liquid resin.

### Thickeners

The liquid resin may also comprise thickeners. Thickeners are particularly suitable for controlling and/or increasing the viscosity of the liquid resin, considering that cyanoacrylate-based monomers usually have a water-like viscosity at ambient temperature.

Suitable thickeners may be selected from the group consisting of poly(meth)acrylates, *acylated cellulose polymers* (*e.g.* cellulose acetate), polyvinyl acetates, partially hydrolysed polyvinyl acetates, polyvinylpyrrolidones, polyoxylates, polycaprolactones, polycyanoacrylates, vinyl acetate copolymers (*e.g*. with vinyl chloride), copolymers of (meth)acrylates with butadiene and styrene, copolymers of vinyl chloride and acrylonitrile, copolymers of ethylene and vinyl acetate, poly(butyleneterephthalate-co-polyethyleneglycolterephthalate), copolymers of lactic acid and caprolactone, and mixtures thereof.

Preferably, the thickeners are selected from the group consisting of polymethylmethacrylate, polycyanoacrylates, copolymers of vinyl acetate and vinyl alcohol, copolymers of vinyl chloride and vinyl acetate, copolymers of ethylene, vinyl acetate, and esters or partial esters of maleic acid, and mixtures thereof. Suitable materials are commercially available under the denomination Degacryl^{®} M 449 from Evonik (polymethylmethacrylate), Levamelt^{®} 900 from Lanxess (copolymers of vinyl acetate and vinyl alcohol), Vinnol^{®} H 40-60 from Wacker (copolymers of vinyl chloride and vinyl acetate), and Vamac^{®} G from DuPont (copolymers of ethylene, vinyl acetate, and esters or partial esters of maleic acid).

The liquid composition may comprise from 2% to 10% by weight, preferably from 3% to 8% by weight, and more preferably from 4% to 7% by weight, of thickeners by total weight of the liquid resin.

### Thixotropic agent

The liquid resin may also comprise thixotropic agents.

The thixotropic agent may be silica, preferably fumed silica, more preferably hydrophobic fumed silica. Hydrophobic fumed silica may also acts as a filler. A hydrophobic fumed silica is commercially available under the commercial denomination Aerosil^{®} R202 from Evonik. The thixotropic agent may also be organic-based thixotropic agents, preferably hydrogenated castor oil.

The liquid resin may comprise from 2% to 10% by weight, preferably from 3% to 8% by weight, more preferably from 4% to 7% by weight, of thixotropic agents by total weight of the liquid resin.

### Fillers and pigments

In addition to hydrophobic fumed silica if present, the liquid composition may also comprise other fillers and pigments, preferably acid-treated fillers and pigments, more preferably organo-silicone modified surface-treated pigments and fillers. Other fillers and pigments should be compatible with cyanoacrylate-based monomers and not excessively impede the photopolymerization where desired. In some cases, pigments may be used to limit excessive light penetration or 'read through' that could limit resolution of printed elements. US patents 4,837,260 and 4,980,086, and US patent applications 2005/0171273 and 2008/0038218 describe cyanoacrylate-compatible fillers.

The liquid resin may comprise from 0.1 to 5 % by weight of other fillers and pigments by total weight of the composition.

### Toughening agents

The liquid resin may also comprise toughening agents.

The toughening agents may be selected from the group consisting of block copolymers (*e.g.* polymethylmethacrylate-co-Polybutylacrylate-co-Polymethylmethacrylate, elastomeric rubbers, elastomeric polymers, liquid elastomers, polyesters, acrylic rubbers, butadiene/acrylonitrile rubber, Buna rubber, polyisobutylene, polyisoprene, natural rubber, synthetic rubber (*e.g*. styrene/butadiene rubber or SBR), polyurethane polymers, ethylene-vinyl acetate polymers, fluorinated rubbers, isoprene-acrylonitrile polymers, chlorosulfonated polyethylenes, homopolymers of polyvinyl acetate, block copolymers, core-shell rubber particles, and mixtures thereof.

The liquid resin may comprise from 1 to 20 % by weight, preferably from 5 to 12 % by weight, of toughening agents by total weight of the composition.

### Plasticizers

The liquid resin may also comprise plasticizers, such a glycerol triacetate and dibutylsebacate.

The liquid resin may comprise from 5 to 20% by weight of plasticizers by total weight of the liquid resin.

### Method for printing 3D articles

The method for printing a 3D article (or 3D printing method), according to the present invention is recited in claim 1.

In some embodiments, such as layer-by-layer printing methods and continuous printing methods including CLIP and ILI methods, the optically transparent portion corresponds to the bottom wall of the tank, and the light is emitted from below the tank, through its bottom surface, into the volume resin. A platform, preferably moveably mounted on an arm, is provided from above the tank, and is submerged into the volume of liquid resin. The bottom surface of the platform is positioned at a specific distance above the top surface of the optically transparent portion, thereby forming a space comprised of liquid resin.

The layer-by-layer 3D printing method may comprise the following steps:
a) immersing the platform in the liquid resin, and positioning its bottom surface at a specific distance from the optically transparent portion of the tank;
b) continuously exposing the liquid resin to light according to a defined pattern;
c) concurrently moving the platform upwards along the Z axis allowing the liquid resin to flow between the bottom layer of the first layer and the top surface of the optically transparent portion and then lowering the platform downwards to the specific distance between the bottom surface of the platform and the top surface of the optically transparent portion for photopolymerizing the first layer of the 3D article;
d) repeating step c) for photopolymerizing additional layers for printing the 3D article; and
e) obtaining a three-dimensional article made of polymerized resin.

Continuous linear 3D printing methods such as CLIP and ILI methods may comprise the following steps:
a) immersing the platform in the liquid resin, and positioning its bottom surface at a specific distance from the optically transparent portion of the tank;
b) continuously exposing the liquid resin to light according to a defined pattern for photopolymerizing progressively printing the 3D article;
c) concurrently moving the platform upwards at a specific elevation rate; and
d) optionally removing the liquid resin in excess with an absorbent paper.

Volumetric 3D printing methods may comprise the following steps:
a) providing a tank holding the liquid resin;
b) exposing the liquid resin to at least a first set of light, either continuously or at a specific sequence for progressively photopolymerizing the liquid resin;
c) concurrently rotating the tank at a at a specific rotation rate; and
d) obtaining a three-dimensional article made of polymerized resin.

The 3D printing method may comprise the following additional steps. Some of these steps may depend on specific methods and/or conditions, as indicated herein before.

The method may comprise the step of providing a tank comprising an optically transparent portion and forming at least one compartment for holding the liquid resin.

The method may comprise the step of rotatably moving the tank in the vertical Z axis.

The method may comprise the step of treating the inner surface of the optically transparent portion, in contact with the liquid resin, for preventing adhesion of the polymerized resin to it.

The method may comprise the step of controlling the emission of the light using a light-controlling device. Particularly, the method may comprise the step of interposing the light-controlling device between the light source and the optically transparent portion.

The method may comprise the step of emitting an additional light, having a different wavelength, for photoinhibiting the polymerization.

The method may comprise the step of providing a platform moveably mounted on an arm, for enabling its motion along the vertical Z axis.

The method may comprise the step of providing a source of acidic inhibitors.

The method may comprise the step of diffusing the acidic inhibitor to the volume of liquid resin through the optically transparent portion, or alternatively through the partition wall.

The method may comprise the step of overlying the inner surface of the optically transparent portion of the tank with a liquid or wettable, optically transparent material. The method may further comprise the step of releasing the acidic inhibitor to the volume of liquid resin from the liquid or wettable, optically transparent material.

The method may comprise the step of providing a resin-immiscible liquid. The method may further comprise the step of releasing the acidic inhibitor to the volume of liquid resin from the resin-immiscible liquid.

The method may comprise the step of photogenerating the acidic inhibitor in the volume of liquid resin.

The method may comprise the step of providing a source of photoinitiators to the liquid resin comprising the combination of metallocene compounds and radical photoinitiators.

The 3D printing method may be computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined. For example, depending on the embodiments, the light intensity, the control of the light, the elevation of the platform, the rotation of the tank, the provision of the liquid resin and/or the provision of the acidic inhibitor may be executed by at least one computer, or any system alike.

### 3D printed articles

3D printed articles are obtained by the present 3D printing method.

The 3D printed article, according to the present invention, is made, at least partly, of polycyanoacrylate. The 3D printed article may comprise from 50 % by weight of polycyanoacrylate, by total weight of the article. The 3D printed article may comprise from 55 %, or from 60 %, or from 65 %, or from 70 %, or from 75 %, or from 80 %, or from 85 %, or from 90 %, or from 95 % by weight of cyanoacrylate by total weight of the article. The 3D printed article may comprise up to 95 % by weight of polycyanoacrylate, by total weight of the article. The 3D printed article may comprise up to 90 %, or up to 85 %, or up to 80 %, or up to 75 % by weight of polycyanoacrylate, by total weight of the article. In one embodiment, the 3D printed article may be substantially free of another polymer other than polycyanoacrylate. By "substantially free of' is meant an article comprising 1 % by weight or less, preferably 0.1 % by weight or less, more preferably 0.01 % by weight or less, most preferably 0 % by weight (free), of another polymer other than polycyanoacrylate.

By "3D printed articles" is meant unmoulded articles. By "polycyanoacrylate" is meant homopolymer(s) obtained from the polymerization of distinct cyanoacrylate-based monomers, or copolymers of mixed cyanoacrylate-based monomers. Optionally additional photopolymerizable monomers, such as (meth)acrylate monomers may copolymerise with cyanoacrylate-based monomers.

The polymerised resin may comprise any additional compounds, such as fillers, pigments, plasticizers, etc.

The 3D printed articles may be of any shape, design and aesthetical aspect, considering the great versatility of the present 3D printing methods. In particular, the 3D printed articles are unstratified articles, even when manufactured from layer-by-layer 3D printing methods. In addition, the 3D articles are tack-free articles. By "tack-free" is meant that the article does not exhibit the so-called surface air inhibition, which is common in photoradical polymerisation.

### EXAMPLES

### EXAMPLE 1 - Printing of a three-dimensional article using a "bottom-up" "layer-by-layer" method

3D articles are printed using a "bottom-up" "layer-by-layer" method according to the protocol and conditions detailed below.
Device: LCD Photon 3D Printer, Anycubic

3D article to be printed: Main body being a rectangular block of 35 mm (length) x 15 mm (width) x 5 mm (thickness in the Z axis), with a base of 0.8 mm

### (thickness)

Light wavelength: 405 nm
Light exposure (base): 60 sec
Light exposure (main body): 30 sec
LCD mask: Yes
Printing protocol: The 3D article is printed by sequentially carrying out the following steps:
   a) immersing the platform in the liquid resin, and positioning its bottom surface at 0.1 mm height from the top surface of the optically transparent portion of the tank;
   b) exposing the liquid resin to light for 60 sec through the LCD mask for photopolymerizing the first layer of the base;
   c) switching off the light and moving the platform 10 mm-upwards along the Z axis for allowing the liquid resin to flow between the bottom layer of the first layer and the top surface of the optically transparent portion;
   d) lowering downwards the bottom surface of the platform to about 0.2 mm from the top surface of the optically transparent portion;
   e) repeating steps b) to d) seven times for photopolymerizing additional layers and for obtaining the base of the 3D article
   f) exposing the liquid resin to light for 30 sec through the LCD mask for photopolymerizing the first layer of the main body;
   g) sequentially carrying out steps c) to e);
   h) repeating steps f) and g) for obtaining a 5 mm-tick main body; and
   i) removing the liquid resin in excess with an absorbent paper.

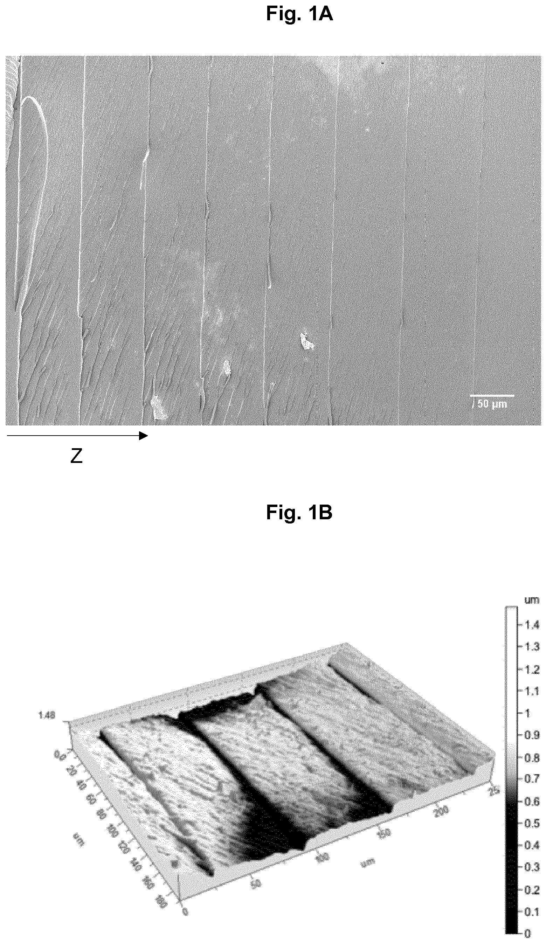

In a first experiment (comparison), a 3D article is printed according to the above protocol from a commercial liquid acrylate resin (Anycubic UV Resin, translucent green). The 3D article obtained exhibits a first wet and then tacky surface, even after further exposing with an LED torch operating at 405nm for several minutes. Eventually the surface becomes tack free but only after about 48 hours. It is believed that the tackiness results from air inhibition of the photopolymerization of the acrylate monomers on the surface of the 3D article. The side of the 3D article, corresponding to the thickness on the Z axis, is examined by electron microscopy and with an optical contour mapping method, the latter basically examines the topography of the sample and highlights zones where deformations occur. A photograph (scale of 50 µm) of a section of the thickness obtained by electron microscopy is shown in **Figure 1A****.** A photograph of a section of the thickness obtained by optical contour mapping method is shown in **Figure 1B****.** The stratification of layers of about 70 µm in thickness along the Z axis is noticeable both under electron microscopy and optical contour mapping. However, layer stratification imparts anisotropy of mechanical properties, which is not wanted.

In a second experiment, three 3D articles are printed according to the above protocol, from three different liquid cyanoacrylate resins *i.e.* a resin comprising cyanoacrylate-based monomers, as detailed in table 1.

**Table 1**

| Components | Resin 1 | Resin 2 | Resin 3 |
|---|---|---|---|
| 2-methoxyethyl cyanoacrylate | 99.9 % | 94.3 % | 94.9 % |
| Polymethyl methacrylate | - | 5.6 % | n/a |
| Hydrophobic fumed silica | - | - | 5.0 % |
| Acylgermane Structure (VII) R₃= -OCH₃ "Ivocerin ^{®}" | 0.075 % | 0.075 % | 0.075 % |
| Ferrocene | 0.02 % | 0.02 % | 0.004 % |
| BF₃·Et₂O | 70 ppm | 70 ppm | 10 ppm |

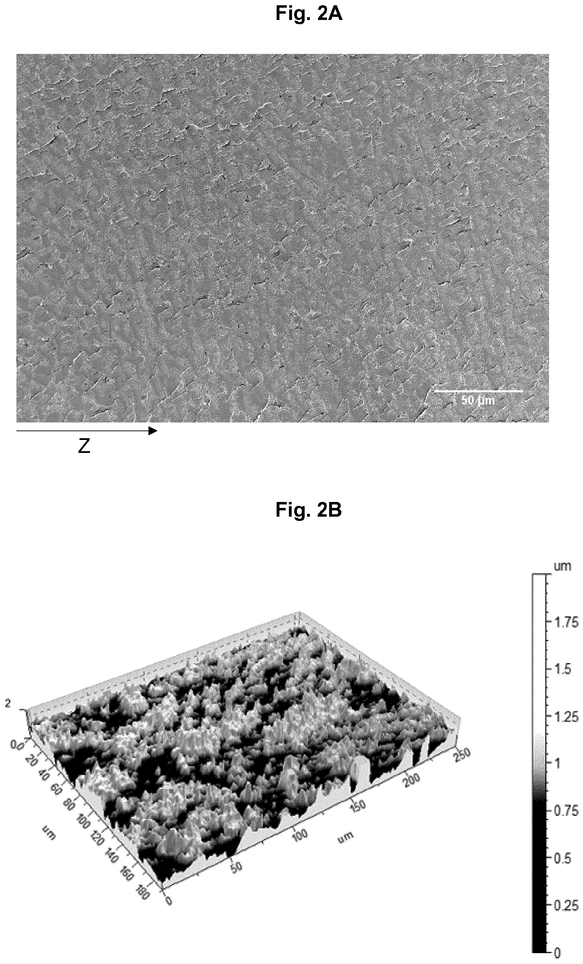

The printed 3D articles exhibit a surface-wetness due to extrusion from a liquid bath, but this is easily transformed, for example by further irradiating the article using a LED torch operating at 405 nm before separated the part from the platform. The thus printed and exposed articles were track free in less than a minute. A photograph (scale of 50 µm) of a section of the thickness obtained by electron microscopy is shown in **Figure 2A****.** A photograph of a section of the thickness obtained by optical contour mapping method is shown in **Figure 2B****.** No stratification of layers along the Z-axis is noticeable under electron microscopy and optical contour mapping.

### EXAMPLE 2 - Inhibition of the photopolymerization of a liquid cyanoacrylate resin using a volatile acidic inhibitor

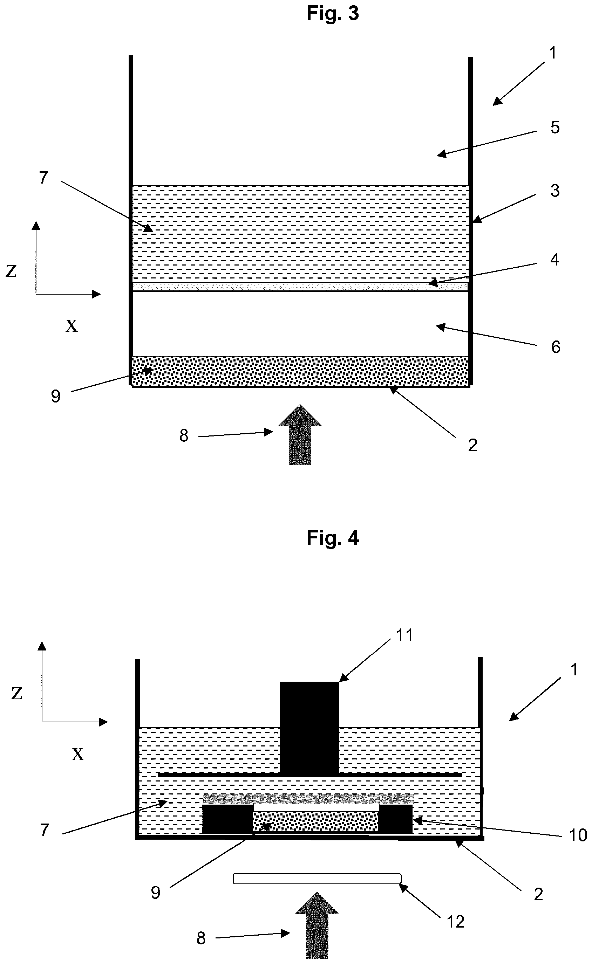

A schematic representation of the device as used in the second experiment in shown in **Figure 3****.**

The tank 1 comprises an optically transparent, non-permeable bottom wall 2 and non-transparent side walls 3. The tank 1 is divided in two compartments by a horizontal, optically transparent partition wall 4 *i.e.* a top open compartment 5 for holding the volume of the liquid resin 7, and a bottom closed compartment 6 for holding the acidic inhibitor. The partition wall 4 is made from the transparent Nafion 212 gas-permeable membrane from Fuel Cell Store Ltd. The light 8 can be transmitted through the bottom wall 2 and the partition wall 4 of the tank 1.
Liquid resin: Resin 2 according to table 1
Light source: LED with an irradiance of 30 mW/cm²
Light wavelength: 410 to 415 nm
Light exposure: 15 sec
Light emission: From bottom the tank
Acidic inhibitor: Liquid Lewis acid complex BF₃·Et₂O from Sigma-Aldrich

In a first experiment (control), no acidic inhibitor is added to the lower compartment 6 of the tank 1, which only comprises dry air. Air oxygen diffuses through the partition wall 4. Upon light exposure, the liquid resin 7 photopolymerizes on the top surface of the partition wall 4. Hence, no "dead zone" is created in the vicinity of the top surface of the partition wall 4 and the polymerized resin adheres to it, which is unwanted.

In a second experiment, 1 ml of the liquid solution of acidic inhibitor 9 is added to the bottom compartment 6 of the tank 1. There is no contact between the liquid solution 9 and the partition wall 4, the surface of the liquid solution 9 being 4 cm below the partition wall 4. As the Lewis acid complex BF₃·Et₂O is volatile, it evaporates into the dry air, and diffuses through the partition wall 4. No compressors or gas handling or conveying equipment for gases is used or needed. Upon light exposure, the liquid resin 7 photopolymerizes only above an unpolymerized liquid layer atop the surface of the partition wall 4, forming a "dead zone".

This example demonstrates that the diffusion of volatile acidic inhibitors through a semi-permeable membrane is suitable for inhibiting the photopolymerization of cyanoacrylate-based monomers. This is particularly useful in CLIP methods, for creating a "dead zone" atop the optically transparent portion of the tank, hereby preventing the adhesion of the polymerized resin to the tank.

### EXAMPLE 3 - Printing of a three-dimensional article using a CLIP method

A schematic representation of the system is shown in **Figure 4****.**
Device: LCD Photon 3D printer, Anycubic with a modified light source
Liquid resin: Resin 1 according to table 1
Light source: 100 LEDs with an irradiance of about 3 mW/cm²
Light wavelength: 450 nm
Acidic inhibitor: Liquid Lewis acid complex BF₃·Et₂O from Sigma-Aldrich
Initial light exposure (base layer): 60 sec
Light exposure (main body): total of 3,000 sec
LCD mask: Yes
Platform elevation (main body): Continuous rate of 100 µm per 60 sec

The device is adapted by placing into the tank 1, on top of the optically transparent portion 2, a resin-impermeable chamber 10 having a volume of 4 cm x 3 cm x 0.5 cm. A volume of 0.1 mL of a liquid solution of acidic inhibitor 9 is poured into the chamber 10, and the chamber 10 is then tightly closed with a transparent Nafion 212 gas-permeable membrane from Fuel Cell Store Ltd, leaving a headspace between the liquid solution 9 and the membrane, for the volatile acidic inhibitor to evaporate. The liquid resin 7 is poured into the tank 1, in order to fully submerge the chamber 10. The platform 11 is then lowered into the liquid resin 7 to a print-starting position 4.0 mm above the membrane. Upon an initial light exposure through a mask 12, a 0.1 mm-thick base layer adhering to the platform 11 is polymerized (not shown). Upon further light exposure, the platform 11 is continuously elevated, and the main body is progressively formed (not shown). Upon completion of the photopolymerization, the resin in excess is removed, and the 3D article is rendered tack-free by further irradiating the article using a LED torch operating at 405 nm before being separated from the platform 11.

This experiment confirms that no polymerization occurs in the vicinity of the top surface of the membrane, wherein a "dead zone" is formed, by the diffusion of the volatile acidic stabiliser through the membrane, hereby preventing the adhesion of the polymerized resin to the tank.

### EXAMPLE 4 - Inhibition of the photopolymerization of a liquid cyanoacrylate resin using a transparent wettable material such as a membrane

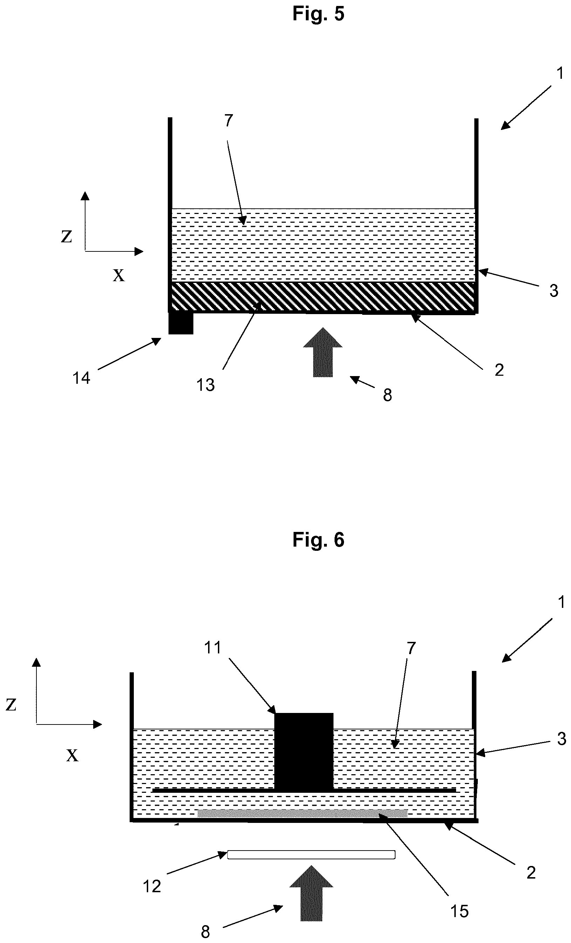

A schematic representation of the tank in shown in **Figure 5****.**

Transparent wettable membrane: Hydrogel contact lens material comprising hydroxymethacrylate/N-vinyl pyrrolidone copolymer commercialised under the denomination SofLens Hilafilcon from Bausch & Lomb Ltd
Liquid resin: Resin 2 according to table 1
Light source: LED with an irradiance of about 30 mW/cm²
Light wavelength: 410 to 415 nm
Acidic inhibitor: Aqueous solution of phosphoric acid (2M) - Bronsted acid
Light exposure (control): 15 sec
Light exposure: 30 sec
LCD mask: Yes

The tank 1 comprises an optically transparent, non-permeable bottom wall 2 and non-transparent side walls 3. A transparent wettable membrane 13 is placed on top of the optically transparent portion 2 of the tank 1.

In a first experiment (control), the membrane 13 is fed with ultrapure water, free of any acidic inhibitor, which is continuously supplied from a reservoir 14. The tank 1 is filed with liquid resin 7, which is immiscible into water. Upon light exposure 8, the liquid resin 7 photopolymerizes on the membrane 13, and adheres to it. Hence, no "dead zone" is created in the vicinity of the top surface of the membrane 13 and the polymerized resin adheres to it, which is unwanted.

In a second experiment, the membrane 13 is fed with an aqueous solution of H₃PO₄ as an acidic inhibitor, which is continuously supplied from a reservoir 14. The tank 1 is filed with a liquid resin 7, which is immiscible into the acidic inhibitor solution. Upon light exposure 8, the liquid resin 7 polymerizes only above an unpolymerized liquid layer having a thickness of about 0.5 mm atop the surface of the membrane 13, forming a "dead zone".

This example demonstrates that the contact of the volume of liquid resin with an acidic inhibitor from a wettable, optically transparent membrane overlying the inner surface of the optically transparent portion of the tank is suitable for inhibiting the polymerization of cyanoacrylate-based monomers. This is particularly useful in ILI methods, for creating a "dead zone" atop the optically transparent portion of the tank, hereby preventing the adhesion of the polymerized resin to the tank.

### EXAMPLE 5 - Printing of a three-dimensional article using an ILI method

A schematic representation of the system in shown in **Figure 6****.**
Device: LCD Photon 3D printer, Anycubic comprising an optically transparent portion made of fluorinated polyester with a modified light source
3D article to be printed: Main body corresponding to a rectangular block of 35 mm (length) x 15 mm (width) x 5 mm (thickness in the Z axis) with a 0.1 mm-thick first layer and a 1 mm-thick base
Liquid resin: Resin 1 according to table 1
Light source: 100 LEDs with an irradiance of about 3 mW/cm²
Light wavelength: 450 nm
Acidic inhibitor: 25 mm x 50 mm solid transparent film of the material Fumapem F-930 ion exchange membrane from Fumatech BWT GmbH
Pretreatment: Activation of the solid transparent film by heating to 80 °C for 12 h in an aqueous solution of 5 % w/w of sulfuric acid (H₂SO₄)
Initial light exposure (first layer): 60 sec
Initial light exposure (base): 600 sec
Light exposure (main body): 4,000 sec
LCD mask: Yes
Platform elevation (base): Continuous rate of 100 µm per 60 sec
Platform elevation (main body): Continuous rate of 600 µm per 60 sec

The device is adapted by placing into the tank 1 on top of the optically transparent portion 2 a solid transparent film 15, previously activated. The liquid resin 7 is poured into the tank 1, in order to fully submerge the film 15. The platform 11 is then lowered into the liquid resin 7 to a print-starting position 3.0 mm above the film 15. Upon an initial light exposure 8, a 0.1 mm-thick base layer adhering to the platform 11 is photopolymerized. Upon further light exposure 8, the platform 11 is continuously elevated, and the base and then the main body are progressively printed. Upon completion of the photopolymerization, the resin in excess is removed, and the 3D article is rendered tack-free by further irradiating the article using a LED torch operating at 405 nm before being separated from the platform 11.

This experiment confirms that no photopolymerization occurs in the vicinity of the top surface of the film, wherein a "dead zone" is formed, by the release of acidic inhibitor from the ion exchange membrane, hereby preventing the adhesion of the polymerized resin to the tank.

### EXAMPLE 6 - Printing of three-dimensional articles using an ILI method

3D articles are printed according to an adapted protocol of example 5.
Liquid resin: Resin 4 according to table 2 below

**Table 2**

| Components | Resin 4 |
|---|---|
| 2-methoxyethyl cyanoacrylate | 99.9 % |
| Acylgermane Structure (VII) R₃= -OCH₃ "Ivocerin ^{®}" | 0.075 % |
| Ferrocene | 0.02 % |
| BF₃·Et₂O | 30 ppm |

Platform elevation rate (base): about 33 µm/sec
Platform elevation rate (main body): about 50 µm/sec

In a first experiment, the LCD mask is replaced by a shutter forming a 35 mm x 15 mm aperture, permitting more efficient use of the light intensity by avoiding the light-absorption by the LCD device itself. A 5 mm-thick base and then a 30 mm-thick main body are printed. The printed 3D article has perfectly regular edges.

In a second experiment, the LCD mask is replaced by a shutter forming a 10 mm-diameter circular aperture. A 5 mm-thick base and then a 95 mm-thick main body are printed. A cylindrical 3D article is obtained.

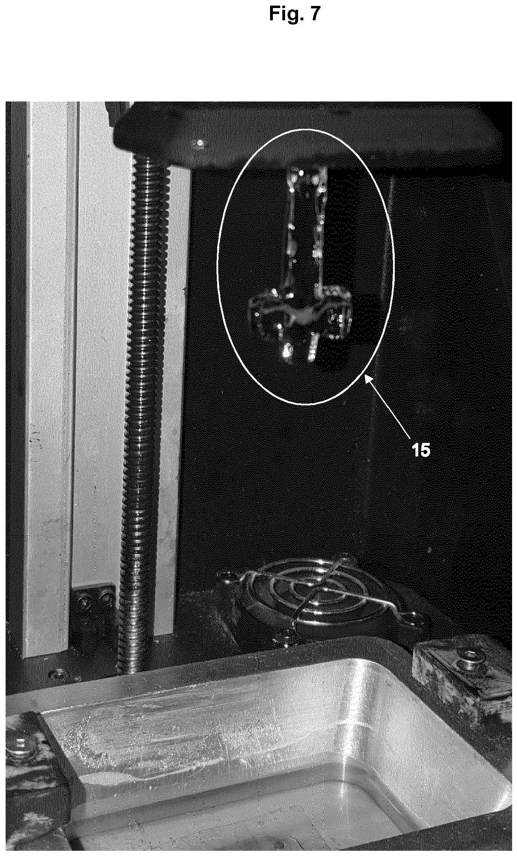

In a third experiment, the LCD mask is replaced by a shutter having a variable aperture. A 5 mm-thick base and then a cross-shaped main body are printed, by adequately adapting the aperture of the shutter during the polymerization process. A photograph of the 3D article after completion, but before separated from the platform is shown in **Figure 7**. A crucifix-shape 3D article 16 is continuously printed.

In a fourth experiment, the protocol of the above first experiment is repeated, except that it is used the Resin 2 according to table 1 and a platform elevation rate of 25 µm/sec for 1,400 sec. A 35 mm x 15 mm x 5 mm block 3D article is obtained.

### EXAMPLE 7 - Photopolymerization of a liquid cyanoacrylate resin employing a perfluorinated liquid as wettable materials

Device: LCD Photon 3D printer, Anycubic with a modified light source
3D article to be printed: Main body corresponding to a rectangular block of 35 mm (length) x 15 mm (width) x 5 mm (thickness in the Z axis)
Perfluorinated liquid: Solution of perfluorooctane from Sigma Aldrich Ltd
Acidic inhibitor: Nonafluorobutane-1-sulfonic acid from Sigma Aldrich Ltd
Platform elevation (main body): Continuous rate of 50 µm per sec
Liquid resin: Resin 2 according to table 1
Light source: LED with an irradiance of 30 mW/cm²
Light wavelength: 410 to 415 nm
Initial light exposure (first layer): 60 sec
Initial light exposure (base): 600 sec
Light exposure (main body): 4,000 sec
Light emission: From bottom the tank through an LCD mask

In a first experiment, the device is adapted by pouring the perfluorinated liquid into the tank on top of the optically transparent portion. The liquid resin is then poured into the tank on top of the layer of perfluorinated liquid. Upon light exposure, the 3D article is printed, and no adherence to the perfluorinated liquid is observed.

In a second experiment, 0.02 g/0.5 ml of perfluorinated acidic inhibitor is added to the perfluorinated liquid, before being poured into the tank. Upon light exposure, the 3D article is also printed, and no adherence to the perfluorinated liquid is observed.

### EXAMPLE 8 - Characterization of inhibition of the polymerization of a liquid cyanoacrylate resin containing an acidic inhibitor

Liquid resin: Resin 1 according to table 1
Acidic inhibitor: Methane sulfonic acid (MSA) from Sigma-Aldrich
Acidic inhibitor concentrations: 0 (control), 1, 5, 10 and 40 ppm of MSA in the liquid resin
Calorimeter: Device comprising an infrared sensor, that measures the temperature of a sample of polymerisable monomer as a function of time (per second) after purposely initiating polymerisation under standardised conditions. The device allows characterisation of polymerisation with regard to when it commences, that is when inhibition is overcome by initiation, and how exothermic the polymerisation process is, once started.

The polymerization of the resin releases heat (exothermic), which can be measured using a calorimeter and represented on a graph showing the heat output due to the exotherm of the initiated polymerization (Y axis) as a function of time (Z axis). A sigmoidal curve is obtained, which rises sharply once the inhibition is overcome by the polymerization. The time necessary to overcome the inhibition is called the induction time (tᵢ) and is dependent on both the concentrations of inhibitors and initiating species.

In these experiments, different concentrations of acidic inhibitor are added to the liquid resin and the response to the addition of a standard concentration (0.2% w/w) of a standard nucleophilic base 2-(morpholinothio)-benzothiazole, Sigma-Aldrich) is recorded.

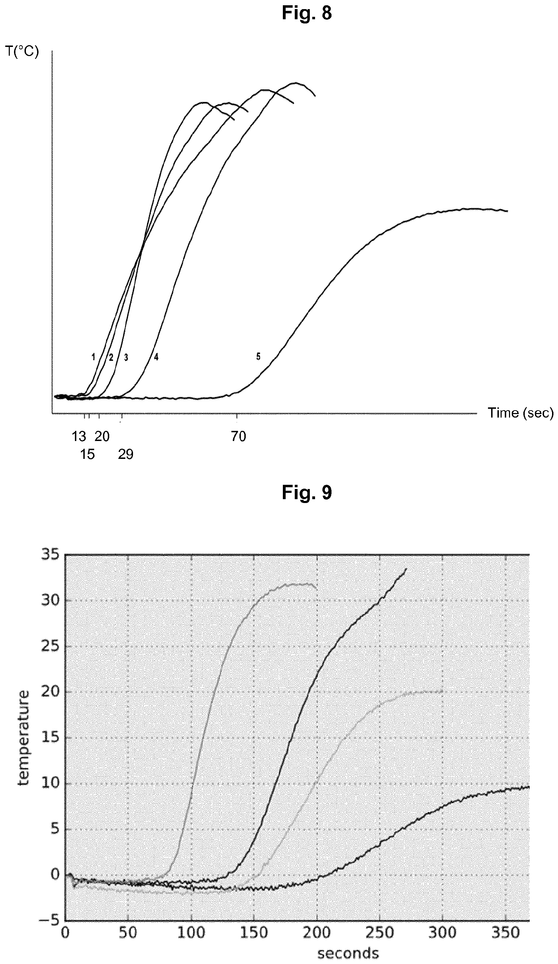

As presented in **Figure 8****,** the induction time increases as the concentration of acidic inhibitor increases *i.e.* 13 sec for the control, 15 sec for a concentration of 1 %w/w, 20 sec for 5 % w/w, 29 sec for 10 % w/w and 70 sec for 40 % w/w.

### EXAMPLE 9 (not according to the invention)

- Printing of three-dimensional articles using a CAL method
Tank: Cylindrical glass vial with a diameter of 15 mm
Tank rotation: Anticlockwise rotation at 120 rpm
Viscous liquid resin: Resin 3 according to table 1
Shutter: 4 mm x 10 mm aperture
Light source: Unmodulated stationary source
Light exposure: 90 sec

A viscous liquid resin is loaded into the vial (*i.e.* tank). The vial is set into continuous rotation. When illuminated by light, the liquid resin in the center of the vial is under constant exposure of light as the vial rotates through all angles. Due to this constant exposure, in the presence of a specific level of acidic inhibitors, the threshold needed to photoinitiate polymerisation and overcome the inhibition is superceded. A solid volumetric cylindrical 3D article, with a diameter of about 4 mm, is continuously produced in the center of the vial. Outside the central polymerization zone, for example, in the peripheral zones of the cylindrical vial, the liquid resin is underexposed because it is not under constant exposure but rather only exposed when it intersects the light beam on each revolution of the rotating sample. Thus, the threshold needed to initiate photopolymerization is not superceded and the acidic inhibitors present inhibit polymerisation. A cylindrical object is printed in the central zone of the vat with dimensions corresponding to the aperture size (diameter 4mm and height 10mm).

### EXAMPLE 10 - Inhibition of the polymerization of a liquid cyanoacrylate resin containing an acidic inhibitor and a latent photoinhibiting system

Liquid resin: Resin 1 according to table 1
Acidic inhibitor: BF₃ etherate from Sigma Aldrich at a concentration of 35 ppm in the liquid resin
Latent inhibition system: 1-chloro-4-propoxythioxanthone (commercialized under the denomination Speedcure CPTX from Lambson) and tert-butyldiphenyliodonium hexafluorophosphate (commercialized under the denomination Speedcure 938 from Lambson), respectively at a concentration of 1 %w/t and 2 %w/w in the liquid resin
Initiation system: A tertiary amine (nucleophilic base)
Light source: US-VIS manicure lamp
Light wavelength (control): 435 nm
Light wavelength: 365 to 405 nm

As presented in **Figure 9****,** the induction time is of about 75 sec when the liquid resin is exposed to a wavelength *i.e.* 435 nm, at which the latent inhibition system is not photosensitive. The induction time increases as the exposure time increases *i.e.* 125 sec per 30 sec, 150 sec per 60 sec and 200 sec per 120 sec, when the liquid resin is exposed to wavelengths *i.e.* 365 to 405 nm, at which the latent inhibition system is photosensitive.

### EXAMPLE 11 - Photopolymerisation to print three-dimensional articles using a photogenerated acid inhibitor

Liquid resin: Resin 5 according to table 3 below

**Table 3**

| Components | Resin 5 |
|---|---|
| 2-methoxyethyl cyanoacrylate | 95.97 % |
| Speedcure 938 | 2 % |
| Speedcure CPTX | 1 % |
| Camphorquinone | 1 % |
| Ferrocene | 300 ppm |
| BF₃·Et₂O | 10 ppm |

First light source (photopolymerization): LED with an irradiance of about 30 mW/cm² at a wavelength of 460 nm with a diameter of about 30 mm.

Second light source (photoinhibition): LED with an irradiance of about 19 mW/cm² at wavelength of 365 to 405 nm with a diameter of about 0.5 mm.

### Light exposure: 45 sec

In a first experiment, a 0.5 mm-thick layer of liquid resin is poured into the tank. The first light is emitted from above the tank to induce the photopolymerization. A 500 µm-thick cylindrical 3D article is obtained.

In a second experiment, a 0.5 mm-thick layer of liquid resin is poured into the tank. The first light is emitted from above the tank for inducing the photopolymerization, while the second light is emitted from below the tank. A 500 µm-thick 3D article in the shape of a disc with a diameter of 30 mm and a 0.5 mm central hole is obtained.

### EXAMPLE 12 - Printing of three-dimensional articles from a liquid resin comprising cyanoacrylate and acrylate monomers

Liquid resin: Resins 6 and 7 according to table 4 below

**Table 1**

| Components | Resin 6 | Resin 7 |
|---|---|---|
| 2-methoxyethyl cyanoacrylate | 79.9 % | 79.9 % |
| Cyclic trimethylol-propane formal acrylate (SR531 from Sartomer) | 20 % | - |
| Dicyclopentanylmethyl acrylate (SR789 from Sartomer) | - | 20 % |
| Acylgermane Structure (VII) R₃= -OCH₃ "Ivocerin ^{®}" | 0.075 % | 0.075 % |
| Ferrocene | 0.02 % | 0.02 % |
| BF₃·Et₂O | 70 ppm | 70 ppm |

Printing protocol: The same as for the first experiment of example 6, except for the platform elevation rate
Platform elevation rate (resin 6): 25 µm/sec for 1,400 sec
Platform elevation rate (resin 7): 33 µm/sec for 1,050 sec

In both experiments, solidified 3D articles are obtained.

## Claims

1. A method for printing a three-dimensional (3D) article, comprising the steps of:
a) providing a tank comprising an optically transparent portion located on the bottom wall of the tank and forming at least one compartment for holding a liquid resin;
b) providing a volume of the liquid resin comprising cyanoacrylate-based monomers, a photoinitiator, and a source of acidic inhibitors held in the at least one compartment of the tank for holding the liquid resin;
c) providing a movable platform, which is submerged in the liquid resin;
d) providing an additional source of acidic inhibitors located below the compartment holding the liquid resin;
e) defining a zone between the bottom surface of the platform and the bottom of the compartment holding the liquid resin, which is divided into a first dead zone located in the vicinity of the bottom of the compartment holding the liquid resin, and a second polymerization zone atop of it;
f) emitting and controlling light and transmitting it to the liquid resin through the optically transparent portion for selectively polymerizing the liquid resin in the polymerization zone;
g) concurrently preventing the polymerization of the monomers using acidic inhibitors outside the polymerization zone including in the first dead zone;
h) obtaining a three-dimensional article made of polymerized resin.

2. A method according to claim 1, in which the method is a layer-by-layer 3D printing method or a continuous 3D printing method; preferably in which the method is a continuous 3D printing method being a continuous linear 3D printing method; more preferably in which the method is selected from the group consisting of the continuous liquid interface printing method (CLIP method), the intelligent liquid interface method (ILI method), and the methods derived therefrom.

3. A method according to any one of the preceding claims, in which the cyanoacrylate-based monomers are selected from the group consisting of mono-functional cyanoacrylate monomers, multi-functional cyanoacrylate monomers including bifunctional cyanoacrylate monomers, hydrid cyanoacrylate monomers, and mixtures thereof

4. A method according to any one of the preceding claims, in which the acidic inhibitors are selected from the group consisting of Lewis acids, Bronsted acids, or acids provided from an acidic ion exchange material.

5. A method according to any one of the preceding claims, in which the acidic inhibitors diffuse to the volume of liquid resin from/through the optically transparent portion.

6. A method according to any one of the preceding claims, in which the acidic inhibitors diffuse to the volume of liquid resin from a separate compartment.

7. A method according to any one of the claims 1 to 4, in which the acidic inhibitors are in contact with the volume of liquid resin from a liquid or wettable, optically transparent material overlying the inner surface of the optically transparent portion of the tank.

8. A method according to any one of the claims 1 to 4, further comprising providing a resin-immiscible liquid, also held in the tank, wherein the acidic inhibitors are in contact with the liquid resin at the interface with the resin-immiscible liquid.

9. A method according to any one of the preceding claims, in which the liquid resin comprises, as the photoinitiator, a combination of metallocene compounds and radical photoinitiators.

10. A method according to any one of the preceding claims, in which the liquid resin comprises additional photopolymerizable monomers, preferably (meth)acrylate monomers.

11. A three-dimensional printing system comprising:
a) a tank (1) comprising an optically transparent portion located on the bottom wall (2) of the tank and forming at least one compartment for holding a liquid resin (7);
b) a volume of the liquid resin comprising cyanoacrylate-based monomers, a photoinitiator, and a source of acidic inhibitors held in the at least one compartment of the tank for holding the liquid resin;
c) a movable platform (11), which is submerged in the liquid resin;
d) an additional source of acidic inhibitors (9) located below the compartment holding the liquid resin
e) a zone between the bottom surface of the platform and the bottom (4) of the compartment holding the liquid resin, which is divided into a first dead zone located in the vicinity of the bottom of the compartment holding the liquid resin, and a second polymerization zone atop of it
f) a light source emitting light (8) for selectively polymerizing the liquid resin in the polymerization zone.

## Patentansprüche

1. Verfahren zum Drucken eines dreidimensionalen (3D) Gegenstands, umfassend die folgenden Schritte:
a) Bereitstellen eines Behälters, umfassend einen optisch transparenten Abschnitt, der sich an der Bodenwand des Behälters befindet und mindestens eine Kammer zum Aufnehmen eines flüssigen Harzes bildet;
b) Bereitstellen eines Volumens des flüssigen Harzes, umfassend Monomere auf Cyanacrylatbasis, einen Photoinitiator und eine Quelle für saure Inhibitoren, die in der mindestens einen Kammer des Behälters zum Aufnehmen des flüssigen Harzes enthalten sind;
c) Bereitstellen einer bewegbaren Plattform, die in das flüssige Harz eingetaucht ist;
d) Bereitstellen einer zusätzlichen Quelle für saure Inhibitoren, die sich unterhalb der Kammer befindet, die das flüssige Harz enthält;
e) Definieren eines Bereichs zwischen der Bodenfläche der Plattform und dem Boden der Kammer, die das flüssige Harz enthält, der in einen erste toten Bereich, der sich in der Nähe des Bodens der Kammer befindet, die das flüssige Harz enthält, und einen zweiten Polymerisationsbereich darüber unterteilt ist;
f) Emittieren und Steuern von Licht und Übertragen des Lichts durch den optisch transparenten Abschnitt auf das flüssige Harz, um das flüssige Harz in dem Polymerisationsbereich selektiv zu polymerisieren;
g) gleichzeitiges Verhindern der Polymerisation der Monomere unter Verwendung saurer Inhibitoren außerhalb des Polymerisationsbereichs, einschließlich des ersten toten Bereichs;
h) Erlangen eines dreidimensionalen Gegenstands, der aus polymerisiertem Harz gefertigt ist.

2. Verfahren nach Anspruch 1, wobei das Verfahren ein schichtweises 3D-Druckverfahren oder ein kontinuierliches 3D-Druckverfahren ist; vorzugsweise wobei das Verfahren ein kontinuierliches 3D-Druckverfahren ist, das ein kontinuierliches lineares 3D-Druckverfahren ist; bevorzugter wobei das Verfahren ausgewählt ist aus der Gruppe, bestehend aus dem kontinuierlichen Flüssigkeitsschnittstellen-Druckverfahren (CLIP-Verfahren), dem intelligenten Flüssigkeitsschnittstellenverfahren (ILI-Verfahren) und den davon abgeleiteten Verfahren.

3. Verfahren nach einem der vorherigen Ansprüche, wobei die Monomere auf Cyanacrylatbasis ausgewählt sind aus der Gruppe, bestehend aus monofunktionellen Cyanacrylatmonomeren, multifunktionellen Cyanacrylatmonomeren, einschließlich bifunktionellen Cyanacrylatmonomeren, Hydridcyanacrylatmonomeren und Gemischen davon.

4. Verfahren nach einem der vorherigen Ansprüche, wobei die sauren Inhibitoren ausgewählt sind aus der Gruppe, bestehend aus Lewis-Säuren, Bronsted-Säuren oder Säuren aus einem sauren Ionenaustauschmaterial.

5. Verfahren nach einem der vorherigen Ansprüche, wobei die sauren Inhibitoren aus dem/durch den optisch transparenten Abschnitt in das Volumen des flüssigen Harzes diffundieren.

6. Verfahren nach einem der vorherigen Ansprüche, wobei die sauren Inhibitoren aus einem separaten Raum in das Volumen des flüssigen Harzes diffundieren.

7. Verfahren nach einem der Ansprüche 1 bis 4, wobei die sauren Inhibitoren mit dem Volumen des flüssigen Harzes aus einem flüssigen oder benetzbaren, optisch transparenten Material, das die Innenfläche des optisch transparenten Abschnitts des Behälters bedeckt, in Kontakt sind.

8. Verfahren nach einem der Ansprüche 1 bis 4, ferner umfassend ein Bereitstellen einer mit dem Harz nicht mischbaren Flüssigkeit, die auch in dem Behälter enthalten ist, wobei die sauren Inhibitoren an der Grenzfläche mit der mit dem Harz nicht mischbaren Flüssigkeit mit dem flüssigen Harz in Kontakt sind.

9. Verfahren nach einem der vorherigen Ansprüche, wobei das flüssige Harz als Photoinitiator eine Kombination von Metallocenverbindungen und radikalischen Photoinitiatoren umfasst.

10. Verfahren nach einem der vorherigen Ansprüche, wobei dem das flüssige Harz zusätzliche photopolymerisierbare Monomere, vorzugsweise (Meth)acrylatmonomere, umfasst.

11. Dreidimensionales Drucksystem, umfassend:
a) einen Behälter (1), umfassend einen optisch transparenten Abschnitt, der sich an der Bodenwand (2) des Behälters befindet und mindestens eine Kammer zum Aufnehmen eines flüssigen Harzes (7) bildet;
b) ein Volumen des flüssigen Harzes, umfassend Monomere auf Cyanacrylatbasis, einen Photoinitiator und eine Quelle für saure Inhibitoren, die in der mindestens einen Kammer des Behälters zum Aufnehmen des flüssigen Harzes enthalten sind;
c) eine bewegbare Plattform (11), die in das flüssige Harz eingetaucht ist;
d) eine zusätzliche Quelle für saure Inhibitoren (9), die sich unterhalb der Kammer befindet, die das flüssige Harz enthält;
e) einen Bereich zwischen der Bodenfläche der Plattform und dem Boden (4) der Kammer, die das flüssige Harz enthält, der in einen erste toten Bereich, der sich in der Nähe des Bodens der Kammer befindet, die das flüssige Harz enthält, und einen zweiten Polymerisationsbereich darüber unterteilt ist;
f) eine Lichtquelle, die Licht (8) zum selektiven Polymerisieren des flüssigen Harzes in der Polymerisationszone emittiert.

## Revendications

1. Procédé d'impression d'un article en trois dimensions (3D), comprenant les étapes consistant à :
a) fournir un réservoir comprenant une partie optiquement transparente située sur la paroi du fond de la cuve et formant au moins un compartiment pour contenir une résine liquide ;
b) fournir un volume de la résine liquide comprenant des monomères à base de cyanoacrylate, un photoinitiateur et une source d'inhibiteurs acides contenus dans l'au moins un compartiment du réservoir pour contenir la résine liquide ;
c) fournir une plate-forme mobile, qui est submergée dans la résine liquide ;
d) fournir une source supplémentaire d'inhibiteurs acides située au-dessous du compartiment contenant la résine liquide ;
e) définir une zone entre la surface inférieure de la plate-forme et le fond du compartiment contenant la résine liquide, qui est divisée en une première zone morte située à proximité du fond du compartiment contenant la résine liquide, et une seconde zone de polymérisation placée au-dessus ;
f) émettre et réguler la lumière et la transmettre à la résine liquide à travers la partie optiquement transparente pour polymériser sélectivement la résine liquide dans la zone de polymérisation ;
g) empêcher simultanément la polymérisation des monomères en utilisant des inhibiteurs acides en dehors de la zone de polymérisation y compris dans la première zone morte ;
h) obtenir un article en trois dimensions constitué d'une résine polymérisée.

2. Procédé selon la revendication 1, dans lequel le procédé est un procédé d'impression 3D couche par couche ou un procédé d'impression 3D continue ; de préférence dans lequel le procédé est un procédé d'impression 3D continue qui est un procédé d'impression 3D linéaire continue ; plus préférablement dans lequel le procédé est choisi dans le groupe constitué par le procédé d'impression à interface liquide continue (procédé CLIP), le procédé à interface liquide intelligente (procédé ILI) et les procédés qui en découlent.

3. Procédé selon l'une quelconque des revendications précédentes, dans lequel les monomères à base de cyanoacrylate sont choisis dans le groupe constitué par les monomères cyanoacrylates monofonctionnels, les monomères cyanoacrylates multifonctionnels y compris les monomères cyanoacrylates bifonctionnels, les monomères cyanoacrylates hybrides, et des mélanges de ceux-ci.

4. Procédé selon l'une quelconque des revendications précédentes, dans lequel les inhibiteurs acides sont choisis dans le groupe constitué par les acides de Lewis, les acides de Bronsted ou des acides fournis par un matériau échangeur d'ions acide.

5. Procédé selon l'une quelconque des revendications précédentes, dans lequel les inhibiteurs acides se diffusent vers le volume de résine liquide depuis/à travers la partie optiquement transparente.

6. Procédé selon l'une quelconque des revendications précédentes, dans lequel les inhibiteurs acides se diffusent vers le volume de résine liquide depuis un compartiment séparé.

7. Procédé selon l'une quelconque des revendications 1 à 4, dans lequel les inhibiteurs acides sont en contact avec le volume de résine liquide d'un matériau liquide ou mouillable, optiquement transparent recouvrant la surface interne de la partie optiquement transparente du réservoir.

8. Procédé selon l'une quelconque des revendications 1 à 4, comprenant en outre la fourniture d'un liquide non miscible à la résine, également contenu dans le réservoir, dans lequel les inhibiteurs acides sont en contact avec la résine liquide à l'interface avec le liquide non miscible à la résine.

9. Procédé selon l'une quelconque des revendications précédentes, dans lequel la résine liquide comprend, en tant que photoinitiateur, une combinaison de composés métallocènes et de photoinitiateurs radicalaires.

10. Procédé selon l'une quelconque des revendications précédentes, dans lequel la résine liquide comprend des monomères photopolymérisables supplémentaires, de préférence des monomères (méth)acrylates.

11. Système d'impression en trois dimensions, comprenant :
a) un réservoir (1) comprenant une partie optiquement transparente située sur la paroi du fond (2) de la cuve et formant au moins un compartiment pour contenir une résine liquide (7) ;
b) un volume de la résine liquide comprenant des monomères à base de cyanoacrylate, un photoinitiateur et une source d'inhibiteurs acides contenus dans l'au moins un compartiment du réservoir pour contenir la résine liquide,
c) une plate-forme mobile (11), qui est submergée dans la résine liquide ;
d) une source supplémentaire d'inhibiteurs acides (9) située au-dessous du compartiment contenant la résine liquide ;
e) une zone entre la surface inférieure de la plate-forme et le fond (4) du compartiment contenant la résine liquide, qui est divisée en une première zone morte située à proximité du fond du compartiment contenant la résine liquide, et une seconde zone de polymérisation placée au-dessus ;
f) une source de lumière émettant de la lumière (8) pour polymériser sélectivement la résine liquide dans la zone de polymérisation.
